(19) **Europäisches Patentamt / European Patent Office / Office européen des brevets**

(11) **EP 4 572 208 A1**

(12) **EUROPEAN PATENT APPLICATION**
published in accordance with Art. 153(4) EPC

(43) Date of publication:
**18.06.2025 Bulletin 2025/25**

(21) Application number: **23851942.5**

(22) Date of filing: **10.08.2023**

(51) International Patent Classification (IPC):
**H04L 5/00** (2006.01)

(52) Cooperative Patent Classification (CPC):
**H04B 7/0456; H04L 5/00**

(86) International application number:
**PCT/CN2023/112249**

(87) International publication number:
**WO 2024/032721 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210969484**

(71) Applicant: **Datang Mobile Communications Equipment Co., Ltd.**
**Beijing 100085 (CN)**

(72) Inventors:
• **HUANG, Qiuping**
  **Beijing 100085 (CN)**
• **SONG, Lei**
  **Beijing 100085 (CN)**

(74) Representative: **Cabinet Nony**
**11 rue Saint-Georges**
**75009 Paris (FR)**

(54) **DMRS PORT DETERMINATION METHOD AND APPARATUS, AND STORAGE MEDIUM**

(57) Embodiments of the present disclosure provide a DMRS port determination method and apparatus, and a storage medium. The method comprises: receiving DMRS port indication information and first indication information sent by a network device, the DMRS port indication information being indicated by means of a first information domain, and the first indication information being used for indicating N pieces of first information, wherein N is an integer greater than 1; and determining a DMRS port on the basis of the DMRS port indication information and the first indication information.

Receiving DMRS port indication information and first indication information transmitted from a network device, where the DMRS port indication information is indicated by one first information field, the first indication information is used to indicate N pieces of first information, and N is an integer greater than 1 — 101

Determining DMRS ports based on the DMRS port indication information and the first indication information — 102

FIG. 1

**Description**

CROSS-REFERENCES TO RELATED APPLICATIONS

The present application claims priority to Chinese patent application No. 202210969484.5 filed on August 12, 2022, entitled "DMRS Port Determination Method and Apparatus, and Storage Medium", which is hereby incorporated by reference in its entirety.

FIELD

The present application relates to the field of communications, and in particular, to methods and apparatuses for determining demodulation reference signal (DMRS) port, and a storage medium.

BACKGROUND

For a physical uplink shared channel (PUSCH), a network device indicates a demodulation reference signal (DMRS) port corresponding to a PUSCH transmission, and a user equipment (UE) performs a DMRS transmission on the corresponding DMRS port. To reduce an overhead for indicating the DMRS port, the network device indicates the DMRS port in a DMRS port configuration corresponding to the number of transmission layers (also called rank) corresponding to the PUSCH transmission.

A multiple transmission/reception points (MTRPs) scenario supports PUSCH repetition in time domain. The same or different redundancy versions (RVs) of the same PUSCH transport block (TB) are repeated over multiple slots or sub-slots, where half of the slots or sub-slots are transmitted in a direction of a transmission/reception point (TRP), and other half of the slots or sub-slots are transmitted in a direction of another TRP. The network device may separately indicate precoding matrices for the two TRPs through two precoding indicator fields. Since the two TRPs are in repetition, the numbers of layers of the repeated copies and the DMRS ports of the two TRPs are exactly the same. At present, for multi-TRPs (M-TRPs) PUSCH repetition in time domain, there is only one DMRS port indicator field, and the DMRS port is determined based on the number of transmission layers indicated by one coding indicator field.

However, the two TRPs correspond to the same layer or DMRS port for PUSCH, resulting in lower uplink transmission throughput.

BRIEF SUMMARY

In response to the problems in the related art, embodiments of the present application provide methods and apparatuses for determining demodulation reference signal (DMRS) port, and a storage medium.

An embodiment of the present application provides a method for determining demodulation reference signal (DMRS) port, and the method includes:

receiving DMRS port indication information and first indication information transmitted from a network device, where the DMRS port indication information is indicated by one first information field, the first indication information is used to indicate N pieces of first information, and N is an integer greater than 1; and

determining DMRS ports based on the DMRS port indication information and the first indication information.

In an embodiment, determining the DMRS ports based on the DMRS port indication information and the first indication information includes:

determining a first number of layers corresponding to the DMRS port indication information based on the first indication information; and

determining the DMRS ports based on the first number of layers and the DMRS port indication information.

In an embodiment, determining the first number of layers corresponding to the DMRS port indication information based on the first indication information includes:

determining the first number of layers based on a sum of second numbers of layers corresponding to the N pieces of first information; or

determining the first number of layers based on a sum of numbers of sounding reference signal (SRS) resources corresponding to the N pieces of first information.

In an embodiment, in case that the DMRS ports are DMRS ports corresponding to codebook-based physical uplink shared channel (PUSCH), the first information is precoding and/or number of layers indication information, and the first number of layers is determined based on a number of transmission layers indicated by the precoding and/or number of layers indication information; and/or

in case that the DMRS ports are DMRS ports corresponding to non-codebook-based physical uplink shared channel (PUSCH), the first information is sounding reference signal (SRS) resource indicator (SRI) information, and the first number of layers is determined based on a number of SRS resources indicated by the SRI information.

In an embodiment, the first number of layers is equal to the sum of the second numbers of layers corresponding to the N pieces of first information; or, the first number of layers is equal to the sum of the numbers of SRS resources corresponding to the N pieces of first information.

In an embodiment, the first number of layers is equal to N times a second number of layers corresponding to one piece of the first information indicated by the first indication information, and/or N times a number of sounding reference signal (SRS) resources corresponding to one piece of the first information indicated by the first indication information.

In an embodiment, the sum of the second numbers of layers corresponding to the N pieces of first information and/or the sum of the numbers of SRS resources corresponding to the N pieces of first information is indicated by the network device.

In an embodiment, determining the first number of layers based on the sum of the second numbers of layers corresponding to the N pieces of first information includes:

in case that a second number of layers corresponding to i-th first information among the N pieces of first information is $L_i$,

determining the first number of layers as $\sum_{i=1}^{N} L_i$.

In an embodiment, determining the first number of layers based on the sum of the numbers of SRS resources corresponding to the N pieces of first information includes:

in case that a number of SRS resources corresponding to i-th first information among the N pieces of first information is $Q_i$,

determining the first number of layers as $\sum_{i=1}^{N} Q_i$.

In an embodiment, in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, where in case that i=1, $L_{i-1}=0$; and/or

in case that the first information is sounding reference signal (SRS) resource indicator (SRI) information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, where in case that i=1, $Q_{i-1}=0$.

In an embodiment, the N pieces of first information are encoded jointly and indicated by one second information field; or

the N pieces of first information are encoded separately and indicated by N third information fields.

In an embodiment, in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, where in case that i=1, $L_{i-1}=0$; or

if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, where in case that i=1, $Q_{i-1}=0$.

In an embodiment, DMRS ports corresponding to any two pieces of the first information among the N pieces of first information are DMRS ports in different code division multiplexing (CDM) groups.

In an embodiment, in case that one first indicator field corresponds to N CDM groups and second numbers of layers and/or numbers of sounding reference signal (SRS) resources corresponding to the N pieces of first information are different, i-th first information among the N pieces of first information corresponds to j-th CDM group among the N CDM groups, where a number of DMRS ports included in the j-th CDM group is equal to the second number of layers or the number of SRS resources corresponding to the i-th first information.

In an embodiment, determining the DMRS ports based on the DMRS port indication information and the first indication information includes:

determining code division multiplexing (CDM) groups corresponding to the N pieces of first information based on the DMRS port indication information, where the CDM groups and second information have an association relationship; and

determining the DMRS ports corresponding to the second information based on the association relationship,

where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex);

a sounding reference signal (SRS) resource set; or

a sounding reference signal (SRS) resource indicator field.

In an embodiment, the method further includes:
determining an association relationship between the DMRS ports and second information based on code division multiplexing (CDM) groups corresponding to the DMRS ports, where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex); or

a sounding reference signal (SRS) resource set.

In an embodiment, determining the DMRS ports based on the first number of layers and the DMRS port indication information includes:

determining a DMRS indication table based on the first number of layers; and

determining the DMRS ports based on the DMRS indication table and the DMRS port indication information.

In an embodiment, all DMRS ports indicated by the one first information field correspond to same DMRS port configuration information.

In an embodiment, the DMRS port configuration information is used to configure one or more of the following:

a DMRS type; or

a maximum number of front-loaded DMRS symbols.

In an embodiment, the first information is used to indicate one or more of the following:

a codeword;

a beam;

an antenna panel;

a transmission/reception point (TRP);

a precoding matrix;

a transmission configuration indicator (TCI) state;

a resource set; or

a control resource set pool index (CORESETPoolIndex).

An embodiment of the present application provides a method for determining demodulation reference signal (DMRS) port, and the method includes:

transmitting DMRS port indication information and first indication information to a terminal, where the DMRS port indication information is indicated by one first information field, the first indication information is used to indicate N pieces of first information, and N is an integer greater than 1; and

receiving DMRSs transmitted from the terminal, where DMRS ports corresponding to the DMRSs are indicated by the DMRS port indication information and the first indication information.

In an embodiment, the DMRS ports correspond to a first number of layers and the DMRS port indication information, the first number of layers is a number of layers corresponding to the DMRS port indication information, and the first number of layers is indicated by the first indication information.

In an embodiment, the first number of layers corresponds to a sum of second numbers of layers corresponding to the N pieces of first information; or, the first number of layers corresponds to a sum of numbers of sounding reference signal (SRS) resources corresponding to the N pieces of first information.

In an embodiment, in case that the DMRS ports are DMRS ports corresponding to codebook-based physical uplink shared channel (PUSCH), the first information is precoding and/or number of layers indication information, and the first number of layers corresponds to a number of transmission layers indicated by the precoding and/or number of layers indication information; and/or

in case that the DMRS ports are DMRS ports corresponding to non-codebook-based physical uplink shared channel (PUSCH), the first information is sounding reference signal (SRS) resource indicator (SRI) information, and the first number of layers corresponds to a number of SRS resources indicated by the SRI information.

In an embodiment, the first number of layers is equal to the sum of the second numbers of layers corresponding to the N pieces of first information; or, the first number of layers is equal to the sum of the numbers of SRS resources corresponding to the N pieces of first information.

In an embodiment, the first number of layers is equal to N times a second number of layers corresponding to one piece of first information indicated by the first indication information, and/or N times a number of sounding reference signal (SRS) resources corresponding to one piece of first information indicated by the first indication information.

In an embodiment, the method further includes:

indicating a sum of second numbers of layers corresponding to the N pieces of first information; and/or

indicating a sum of numbers of SRS resources corresponding to the N pieces of first information.

In an embodiment, in case that a second number of layers corresponding to i-th first information among the N pieces of first information is $L_i$, the first number of layers is $\sum_{i=1}^{N} L_i$.

In an embodiment, in case that a number of SRS resources corresponding to i-th first information among the N pieces of first information is $Q_i$, the first number of layers is $\sum_{i=1}^{N} Q_i$.

In an embodiment, in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, where in case that i=1, $L_{i-1}=0$; and/or

in case that the first information is SRI information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, where in case that i=1, $Q_{i-1}=0$.

In an embodiment, the method further includes:

performing joint encoding on the N pieces of first information, and indicating the N pieces of first information by one second information field; or

performing independent encoding on the N pieces of first information, and indicating the N pieces of first information by N third information fields.

In an embodiment, in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, where in case that i=1, $L_{i-1}=0$; or

if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, where in case that i=1, $Q_{i-1}=0$.

In an embodiment, DMRS ports corresponding to any two pieces of the first information among the N pieces of first information are DMRS ports in different code division multiplexing (CDM) groups.

In an embodiment, in case that one first indicator field corresponds to N CDM groups and second numbers of layers and/or numbers of SRS resources corresponding to the N pieces of first information are different, i-th first information among the N pieces of first information corresponds to j-th CDM group among the N CDM groups, where a number of DMRS ports included in the j-th CDM group is equal to a second number of layers or a number of SRS resources corresponding to the i-th first information.

In an embodiment, the method further includes:
transmitting an association relationship between code division multiplexing (CDM) groups and second information to the terminal, where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex);

a sounding reference signal (SRS) resource set; or

a sounding reference signal (SRS) resource indicator field.

In an embodiment, the first number of layers is used to determine a DMRS indication table, and the DMRS indication table is used to determine the DMRS ports.

In an embodiment, all DMRS ports indicated by the one first information field correspond to same DMRS port configuration information.

In an embodiment, the DMRS port configuration information is used to configure one or more of the following:

a DMRS type; or

a maximum number of front-loaded DMRS symbols.

In an embodiment, the first information is used to indicate one or more of the following:

a codeword;

a beam;

an antenna panel;

a transmission/reception point (TRP);

a precoding matrix;

a transmission configuration indicator (TCI) state;

a resource set; or

a control resource set pool index (CORESETPoolIndex).

An embodiment of the present application provides a terminal, including a memory, a transceiver, and a processor,

where the memory is used for storing a computer program; the transceiver is used for receiving and transmitting data under control of the processor; and the processor is used for reading the computer program in the memory and performing the above method performed by the terminal.

An embodiment of the present application provides a network device, including a memory, a transceiver, and a processor,

where the memory is used for storing a computer program; the transceiver is used for receiving and transmitting data under control of the processor; and the processor is used for reading the computer program in the memory and performing the above method performed by the network device.

An embodiment of the present application provides an apparatus for determining demodulation reference signal (DMRS) port, including:

a receiving unit, used for receiving DMRS port indication information and first indication information transmitted from a network device, where the DMRS port indication information is indicated by one first information field, the first indication information is used to indicate N pieces of first information, and N is an integer greater than 1; and

a first determining unit, used for determining DMRS ports based on the DMRS port indication information and the first indication information.

In an embodiment, the first determining unit includes:

a first determining module, used for determining a first number of layers corresponding to the DMRS port indication information based on the first indication information; and

a second determining module, used for determining the DMRS ports based on the first number of layers and the DMRS port indication information.

In an embodiment, the first determining module includes:

a first determining sub-module, used for determining the first number of layers based on a sum of second numbers of layers corresponding to the N pieces of first information; or

a second determining sub-module, used for determining the first number of layers based on a sum of numbers of sounding reference signal (SRS) resources corresponding to the N pieces of first information.

In an embodiment, in case that the DMRS ports are DMRS ports corresponding to codebook-based physical uplink shared channel (PUSCH), the first information is precoding and/or number of layers indication information, and the first number of layers is determined based on a number of transmission layers indicated by the precoding and/or number of layers indication information; and/or

in case that the DMRS ports are DMRS ports corresponding to non-codebook-based physical uplink shared channel (PUSCH), the first information is sounding reference signal (SRS) resource indicator (SRI) information, and the first number of layers is determined based on a number of SRS resources indicated by the SRI information.

In an embodiment, the first number of layers is equal to the sum of the second numbers of layers corresponding to the N pieces of first information; or, the first number of layers is equal to the sum of the numbers of SRS resources corresponding to the N pieces of first information.

In an embodiment, the first number of layers is equal to N times a second number of layers corresponding to one piece of the first information indicated by the first indication information, and/or N times a number of sounding reference signal (SRS) resources corresponding to one piece of the first information indicated by the first indication information.

In an embodiment, the sum of the second numbers of layers corresponding to the N pieces of first information and/or the sum of the numbers of SRS resources corresponding to the N pieces of first information is indicated by the network device.

In an embodiment, the first determining sub-module is used for:

in case that a second number of layers corresponding to i-th first information among the N pieces of first information is $L_i$, determining the first number of layers as $\sum_{i=1}^{N} L_i$.

In an embodiment, the second determining sub-module is used for:

in case that a number of SRS resources corresponding to i-th first information among the N pieces of first information is $Q_i$, determining the first number of layers as $\sum_{i=1}^{N} Q_i$.

In an embodiment, in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, where in case that i=1, $L_{i-1}=0$; and/or

in case that the first information is sounding reference signal (SRS) resource indicator (SRI) information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, where in case that i=1, $Q_{i-1}=0$.

In an embodiment, the N pieces of first information are encoded jointly and indicated by one second information field; or

the N pieces of first information are encoded separately and indicated by N third information fields.

In an embodiment, in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, where in case that i=1, $L_{i-1}=0$; or

if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, where in case that i=1, $Q_{i-1}=0$.

In an embodiment, DMRS ports corresponding to any two pieces of the first information among the N pieces of first information are DMRS ports in different code division multiplexing (CDM) groups.

In an embodiment, in case that one first indicator field corresponds to N CDM groups and second numbers of layers and/or numbers of sounding reference signal (SRS) resources corresponding to the N pieces of first information are different, i-th first information among the N pieces of first information corresponds to j-th CDM group among the N CDM groups, where a number of DMRS ports included in the j-th CDM group is equal to the second number of layers or the number of SRS resources corresponding to the i-th first information.

In an embodiment, the first determining unit includes:

a third determining module, used for determining code division multiplexing (CDM) groups corresponding to the N pieces of first information based on the DMRS port indication information, where the CDM groups and second information have an association relationship; and

a fourth determining module, used for determining the DMRS ports corresponding to the second information based on the association relationship,

where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex);

a sounding reference signal (SRS) resource set; or

a sounding reference signal (SRS) resource indicator field.

In an embodiment, the apparatus further includes:

a second determining unit, used for determining an association relationship between the DMRS ports and second information based on code division multiplexing (CDM) groups corresponding to the DMRS ports, where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex); or

a sounding reference signal (SRS) resource set.

In an embodiment, the second determining module is used for:

determining a DMRS indication table based on the first number of layers; and

determining the DMRS ports based on the DMRS indication table and the DMRS port indication information.

In an embodiment, all DMRS ports indicated by the one first information field correspond to same DMRS port configuration information.

In an embodiment, the DMRS port configuration information is used to configure one or more of the following:

a DMRS type; or

a maximum number of front-loaded DMRS symbols.

In an embodiment, the first information is used to indicate one or more of the following:

a codeword;

a beam;

an antenna panel;

a transmission/reception point (TRP);

a precoding matrix;

a transmission configuration indicator (TCI) state;

a resource set; or

a control resource set pool index (CORESETPoolIndex).

An embodiment of the present application provides an apparatus for determining demodulation reference signal (DMRS) port, including:

a first transmitting unit, used for transmitting DMRS port indication information and first indication information to a terminal, where the DMRS port indication information is indicated by one first information field, the first indication information is used to indicate N pieces of first information, and N is an integer greater than 1; and

a receiving unit, used for receiving DMRSs transmitted from the terminal, where DMRS ports corresponding to the DMRSs are indicated by the DMRS port indication information and the first indication information.

In an embodiment, the DMRS ports correspond to a first number of layers and the DMRS port indication information, the first number of layers is a number of layers corresponding to the DMRS port indication information, and the first number of layers is indicated by the first indication information.

In an embodiment, the first number of layers corresponds to a sum of second numbers of layers corresponding to the N pieces of first information; or, the first number of layers corresponds to a sum of numbers of sounding reference signal (SRS) resources corresponding to the N pieces of first information.

In an embodiment, in case that the DMRS ports are DMRS ports corresponding to codebook-based physical uplink shared channel (PUSCH), the first information is precoding and/or number of layers indication information, and the first number of layers corresponds to a number of transmission layers indicated by the precoding and/or number of layers indication information; and/or

in case that the DMRS ports are DMRS ports corresponding to non-codebook-based physical uplink shared channel (PUSCH), the first information is sounding reference signal (SRS) resource indicator (SRI) information, and the first number of layers corresponds to a number of SRS resources indicated by the SRI information.

In an embodiment, the first number of layers is equal to the sum of the second numbers of layers corresponding to the N pieces of first information; or, the first number of layers is equal to the sum of the numbers of SRS resources corresponding to the N pieces of first information.

In an embodiment, the first number of layers is equal to N times a second number of layers corresponding to one piece of first information indicated by the first indication information, and/or N times a number of sounding reference signal (SRS) resources corresponding to one piece of first information indicated by the first indication information.

In an embodiment, the apparatus further includes:
an indicating unit, used for indicating a sum of second numbers of layers corresponding to the N pieces of first information; and/or indicating a sum of numbers of SRS resources corresponding to the N pieces of first information.

In an embodiment, in case that a second number of layers corresponding to i-th first information among the N pieces of first information is $L_i$, the first number of layers is $\sum_{i=1}^{N} L_i$.

In an embodiment, in case that a number of SRS resources corresponding to i-th first information among the N pieces of first information is $Q_i$, the first number of layers is $\sum_{i=1}^{N} Q_i$.

In an embodiment, in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, where in case that i=1, $L_{i-1}=0$; and/or
in case that the first information is SRI information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, where in case that i=1, $Q_{i-1}=0$.

In an embodiment, the apparatus further includes: an encoding unit, used for:

performing joint encoding on the N pieces of first information, and indicating the N pieces of first information by one second information field; or

performing independent encoding on the N pieces of first information, and indicating the N pieces of first information by N third information fields.

In an embodiment, in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, where in case that i=1, $L_{i-1}=0$; or

if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, where in case that i=1, $Q_{i-1}=0$.

In an embodiment, DMRS ports corresponding to any two pieces of the first information among the N pieces of first information are DMRS ports in different code division multiplexing (CDM) groups.

In an embodiment, in case that one first indicator field corresponds to N CDM groups and second numbers of layers and/or numbers of SRS resources corresponding to the N pieces of first information are different, i-th first information among the N pieces of first information corresponds to j-th CDM group among the N CDM groups, where a number of DMRS ports included in the j-th CDM group is equal to a second number of layers or a number of SRS resources corresponding to the i-th first information.

In an embodiment, the apparatus further includes:
a second transmitting unit, used for transmitting an association relationship between code division multiplexing (CDM) groups and second information to the terminal, where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex);

a sounding reference signal (SRS) resource set; or

a sounding reference signal (SRS) resource indicator field.

In an embodiment, the first number of layers is used to determine a DMRS indication table, and the DMRS indication table is used to determine the DMRS ports.

In an embodiment, all DMRS ports indicated by the one first information field correspond to same DMRS port configuration information.

In an embodiment, the DMRS port configuration information is used to configure one or more of the following:

a DMRS type; or

a maximum number of front-loaded DMRS symbols.

In an embodiment, the first information is used to indicate one or more of the following:

a codeword;

a beam;

an antenna panel;

a transmission/reception point (TRP);

a precoding matrix;

a transmission configuration indicator (TCI) state;

a resource set; or

a control resource set pool index (CORESETPoolIndex).

An embodiment of the present application further provides a processor-readable storage medium, where the processor-readable storage medium stores a computer program, and the computer program is used for causing a processor to perform any of the above methods.

An embodiment of the present application further provides a computer-readable storage medium, where the computer-readable storage medium stores a computer program, and the computer program is used for causing a computer to perform any of the above methods.

An embodiment of the present application further provides a communication device, where the communication device stores a computer program, and the computer program is used for causing the communication device to perform any of the above methods.

An embodiment of the present application further provides a chip product, where the chip product stores a computer program, and the computer program is used for causing the chip product to perform any of the above methods.

In the methods and apparatuses for determining DMRS port and the storage medium provided by the embodiments of the present application, the terminal determines the DMRS ports based on the DMRS port indication information indicated by one first information field and the first indication information indicating N pieces of first information, where the DMRS port indication information and the first indication information are transmitted from the network device. As such, one information field is used to jointly indicate the DMRS ports for N TRPs or antenna panels to achieve PUSCH repetition, which improves the transmission rate of PUSCH, and also reduces the overhead for indicating the DMRS port.

BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative effort for those skilled in the art.

FIG. 1 is a first schematic flowchart of a method for determining demodulation reference signal (DMRS) port according to an embodiment of the present application;

FIG. 2 is a second schematic flowchart of a method for determining DMRS port according to an embodiment of the present application;

FIG. 3 is a schematic structural diagram of a terminal according to an embodiment of the present application;

FIG. 4 is a schematic structural diagram of a network device according to an embodiment of the present application;

FIG. 5 is a first schematic structural diagram of an apparatus for determining DMRS port according to an embodiment of the present application; and

FIG. 6 is a second schematic structural diagram of an apparatus for determining DMRS port according to an embodiment of the present application.

DETAILED DESCRIPTION

To better describe the solutions in the embodiments of the present application, relevant knowledge is introduced below.

A network device indicates a demodulation reference signal (DMRS) port corresponding to a physical uplink shared channel (PUSCH) transmission, and a terminal performs DMRS transmission on the corresponding DMRS port.

Under a given number of transmission layers (also called rank), there are multiple DMRS port configurations, that is, there are multiple DMRS port combinations. Table 1 shows a DMRS allocation table corresponding to the DMRS port configuration, where PUSCH transmission uses cyclic prefix orthogonal frequency division multiplexing (CP-OFDM) waveform, a DMRS type is Type 2, the maximum number of front-loaded DMRS symbol is 1, and the number of transmission layers is 2.

Table 1 DMRS allocation table

| Number of DMRS CDM group(s) without data | DMRS port(s) |
|---|---|
| 1 | 0, 1 |
| 2 | 0, 1 |
| 2 | 2, 3 |
| 3 | 0, 1 |
| 3 | 2, 3 |
| 3 | 4, 5 |
| 2 | 0, 2 |

Number of DMRS CDM group(s) without data in Table 1 indicates the number of DMRS code division multiplexing (CDM) groups without data. DMRS port(s) in Table 1 indicates the number of DMRS ports.

To reduce an overhead for indicating the DMRS port, the network device indicates the DMRS port in a DMRS port configuration corresponding to the number of transmission layers corresponding to the PUSCH transmission. In case that the PUSCH is a codebook-based PUSCH scheduled by downlink control information (DCI), the number of transmission layers corresponding to the PUSCH is indicated by precoding information and number of layers (pre-configuration and number of layers) field in the DCI, and the number of transmission layers corresponding to the PUSCH is equal to the number of transmission layers indicated by this field. In case that the PUSCH is a non-codebook-based PUSCH scheduled by DCI, the number of transmission layers corresponding to the PUSCH is indicated by sounding reference signal (SRS) resource indicator (SRI) field in the DCI, and the number of transmission layers corresponding to the PUSCH is equal to the number of SRS resources indicated by the SRI field.

Furthermore, in the new radio (NR) system version 17 (Release 17, Rel-17) protocol, the multiple transmission/reception points (MTRPs) scenario supports PUSCH repetition in time domain. The same or different redundancy versions (RVs) of the same PUSCH transport block (TB) are repeated over multiple slots or sub-slots, where half of the slots or sub-slots are transmitted in a direction of a transmission/reception point (TRP), and other half of the slots or sub-slots are transmitted in a direction of another TRP.

The network device may separately indicate precoding matrices for two TRPs through two precoding indicator fields. For codebook-based PUSCH, the two precoding indicator fields are precoding information and number of layers field and second precoding information and number of layers field. For non-codebook-based PUSCH, the two precoding indicator fields are SRI field and second SRI field.

Since the two TRPs are in repetition, the numbers of layers of the repeated copies and the DMRS ports of the two TRPs are exactly the same. At present, for MTRPs PUSCH repetition in time domain, there is only one DMRS port indicator field, and the DMRS port is determined based on the number of transmission layers indicated by one coding indicator field, that is, the DMRS port is indicated based on the DMRS port configuration corresponding to the number of transmission layers indicated by the first precoding indicator field. For the codebook-based PUSCH, the one coding indicator field is the precoding information and number of layers field; and for the non-codebook-based PUSCH, the one coding indicator field is the SRI field. In this way, the two TRPs correspond to the same transmission layers, that is, the same layer or DMRS port for PUSCH, resulting in lower uplink transmission throughput.

To improve the throughput of uplink transmission, it may be considered that two TRPs or antenna panels correspond to different layers or DMRS ports for PUSCH respectively, and the different layers or DMRS ports perform precoding and transmission separately. In this scheme, DMRS ports need to be indicated separately for the two TRPs or antenna panels.

A solution that may be easily gotten is to add a DMRS port indicator field in DCI, and each TRP or antenna panel corresponds to one DMRS port indicator field. However, this solution increases the overhead for indicating the DMRS port. In response to one or more of the above problems in related art, embodiments of the present application provide methods and apparatuses for determining DMRS port, and a storage medium. In the present application, a terminal determines DMRS ports based on DMRS port indication information indicated by one first information field and first indication information indicating N pieces of first information, where the DMRS port indication information and the first indication information are transmitted from a network device. As such, one information field is used to jointly indicate the DMRS ports for N TRPs or antenna panels to achieve PUSCH repetition, which improves the transmission rate of PUSCH, and also reduces the overhead for indicating the DMRS port.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The terms "first", "second", etc. in the embodiments of the present application are only used for descriptive purposes and are used to distinguish similar features, and cannot be understood as indicating or implying relative importance or implicitly indicating the number of the indicated features. Therefore, features defined by "first" and "second" may explicitly or implicitly include at least one of these features. In the embodiments of the present application, the term "multiple" refers to two or more than two, and other quantifiers are similar to it.

"Determining B based on A" in the present application means that the factor A should be considered when determining B. It is not limited to "determining B only based on A", but also includes "determining B based on A and C", "determining B based on A, C and E", "determining C based on A, and further determining B based on C", etc. In addition, it may also include taking A as a condition for determining B, for example, "in case that A meets a first condition, determining B by using a first method". For another example, "in case that A meets a second condition, determining B", etc. For another example, "in case that A meets a third condition, determining B based on a first parameter", etc. In an embodiment, it may be that A is taken as a condition for determining a factor of B, for example, "in case that A meets the first condition, determining C by using the first method, and further determining B based on C", etc.

The solutions according to the embodiments of the present application may be applicable to various systems, including but not limited to 5G systems, 6G systems, or their evolved systems, or other orthogonal frequency division multiplexing (OFDM) systems, discrete Fourier transform spread OFDM (DFT-S-OFDM) systems, etc. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the base station and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

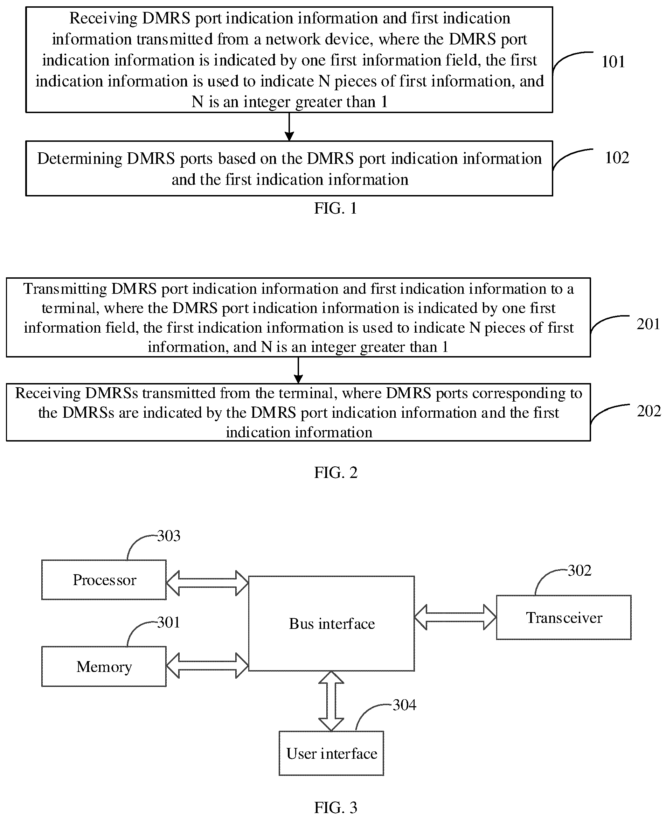

FIG. 1 is a first schematic flowchart of a method for determining demodulation reference signal (DMRS) port according to an embodiment of the present application. As shown in FIG. 1, the method is performed by a terminal, and the method at least includes the following steps.

Step 101: receiving DMRS port indication information and first indication information transmitted from a network device, where the DMRS port indication information is indicated by one first information field, the first indication information is used to indicate N pieces of first information, and N is an integer greater than 1.

In an embodiment, some examples of the first information include: precoding matrix indication information, indication information of number of layers, sounding reference signal (SRS) resource indication information, indication information of precoding matrix and number of layers, precoding matrix, number of layers, SRS resource, etc.

The first indication information may be carried through radio resource control (RRC) signaling, carried through media access control-control element (MAC-CE) or carried through downlink control information (DCI) signaling. For example, the first indication information is carried through one or more RRC parameters. For another example, the first indication information is carried through one or more information fields in the DCI.

In an embodiment, in a scenario with multiple transmission/reception points (MTRPs) or multiple antenna panels, the terminal receives the DMRS port indication information and the first indication information corresponding to the DMRS port indication information transmitted from the network device. The DMRS port indication information is indicated by one first information field, that is, through one information field. The DMRS port indication information or the one first information field is used to indicate DMRS ports for N antenna panels or TRPs.

The first indication information is used to indicate N pieces of first information, where N is an integer greater than 1. The first information is, for example, precoding and/or number of layers indication information, SRI information, etc. In an embodiment, the first indication information is carried through one information field, that is, the N pieces of first information are indicated by the same information field (for example, one precoding and number of layers field indication). In an embodiment, the first indication information is carried through multiple information fields, that is, the N pieces of first information are indicated by N information fields (for example, N precoding and number of layers field indications). The first information may be used to determine the number of transmission layers (also called rank), and the N pieces of first information are used to determine N pieces of the number of transmission layers.

In an embodiment, one piece of first information indicates one piece of information. For example, one piece of first information indicates one precoding matrix. For another example, one piece of first information indicates one number of layers. For another example, one piece of first information indicates one precoding matrix and number of layers.

In an embodiment, one piece of first information indicates a group of information. For example, one piece of first information indicates a group of SRS resources, that is, indicates multiple SRIs.

In an embodiment, the first indication information includes one piece of first information, and the first information is applicable to each of the N pieces of first information. For example, the first information is precoding and/or number of layers indication information. In an embodiment, a first piece of the first information in the first indication information indicates one number of layers and one precoding matrix, and other pieces of the first information only indicate precoding matrices. The number of layers is applicable to all first information. In an embodiment, the numbers of layers corresponding to the precoding matrices corresponding to all other pieces of first information are equal to the number of layers indicated by the first piece of the first information. In an embodiment, all the first information correspond to the same number of layers. In an embodiment, the numbers of layers corresponding to the precoding matrices corresponding to all the first information are equal to 1/N of the number of layers indicated by the first piece of the first information.

For example, the first information is SRS resource indication information. In an embodiment, the first piece of the first information in the first indication information indicates a group of SRS resources, and the number of SRS resources in this group is the same as the number of SRS resources indicated by other pieces of the first information. That is, the number of SRS resources corresponding to all other first information is determined based on the number of SRS resources indicated by the first piece of the first information. In an embodiment, the first piece of the first information indicates a group of SRS resources and a number of SRS resources, and the number of SRS resources is equal to the sum of the numbers of SRS resources in all groups indicated by all the first information.

In an embodiment, the number of SRS resources indicated by each first indication information is the same. As such, in an embodiment, the first piece of the first information indicates a group of SRS resources and a number of SRS resources, and the number of SRS resources is equal to N times the number of SRS resources indicated by any piece of first information.

Step 102: determining DMRS ports based on the DMRS port indication information and the first indication information.

The terminal determines the DMRS ports based on the DMRS port indication information and the first indication information transmitted from the network device. There are multiple DMRS ports, and the terminal may use the determined multiple DMRS ports to transmit PUSCH in a multi-antenna panels or MTRPs scenario.

In the method for determining DMRS port provided by the embodiments of the present application, the terminal determines the DMRS ports based on the DMRS port indication information indicated by one first information field and the first indication information indicating N pieces of first information, where the DMRS port indication information and the first indication information are transmitted from the network device. As such, one information field is used to jointly indicate the DMRS ports for N TRPs or antenna panels to achieve PUSCH repetition, which improves the transmission rate of PUSCH, and also reduces the overhead for indicating the DMRS port.

In an embodiment, the step 102: determining the DMRS ports based on the DMRS port indication information and the first indication information includes:

determining a first number of layers corresponding to the DMRS port indication information based on the first indication information; and

determining the DMRS ports based on the first number of layers and the DMRS port indication information.

In an embodiment, the terminal determines the DMRS ports based on the DMRS port indication information and the first indication information, which includes:
the terminal determines the first number of layers corresponding to the DMRS port indication information based on the first indication information; and then the terminal determines the DMRS ports based on the determined first number of layers and the DMRS port indication information.

The first number of layers is the number of transmission layers corresponding to the DMRS port indication information, and is also the number of transmission layers corresponding to all DMRS ports that are finally determined.

In an embodiment, the first number of layers is indicated by first indication information.

In an embodiment, a way of indicating the first number of layers by the first indication information is:

the first indication information indicates a second number of layers corresponding to the first information, where the first number of layers has a corresponding relationship with the second number of layers corresponding to the first information indicated by the first indication information, and then the terminal may determine the first number of layers by determining the second number of layers corresponding to the first information.

In an embodiment, another way of indicating the first number of layers by the first indication information is: the first information indicated by the first indication information indicates a second number of layers, where the first number of layers has a corresponding relationship with the second number of layers, and then the terminal may determine the first number of layers based on the second number of layers indicated by the first information.

In an embodiment, another way of indicating the first number of layers by the first indication information is: the first information indicated by the first indication information indicates SRS resources, where the first number of layers has a corresponding relationship with the number of SRS resources, and then the terminal may determine the first number of layers based on the number of SRS resources corresponding to the first information.

In an embodiment, the above corresponding relationship is a function or operation relationship. For example, it is a sum operation. For another example, it is a multiplication operation (for example, multiplying by N times), etc. Some examples of functional relationship are: the first number of layers is a function of the second number of layers; or, the first number of layers is a function of the number of SRS resources.

In an embodiment, in case that the DMRS ports are DMRS ports corresponding to codebook-based PUSCH, the first information is precoding and/or number of layers indication information, and the first number of layers is determined based on a number of transmission layers indicated by the precoding and/or number of layers indication information; and/or
in case that the DMRS ports are DMRS ports corresponding to non-codebook-based PUSCH, the first information is SRI information, and the first number of layers is determined based on a number of SRS resources indicated by the SRI information.

In an embodiment, PUSCH may include codebook-based PUSCH and non-codebook-based PUSCH. Correspondingly, the DMRS ports corresponding to PUSCH transmission may include DMRS port corresponding to codebook-based PUSCH and DMRS port corresponding to non-codebook-based PUSCH.

In case that the DMRS ports are DMRS ports corresponding to codebook-based PUSCH, the first information may be precoding and/or number of layers indication information, each piece of the precoding and/or number of layers indication information indicates one number of layers. The first number of layers corresponding to the DMRS port indication information is determined based on N pieces of precoding and/or number of layers indication information. For example, the first number of layers corresponding to the DMRS port indication information is the sum of the numbers of layers indicated by N pieces of precoding and/or number of layers indication information. In an embodiment, the precoding indication information is transmission precoding matrix indicator (TPMI), the number of layers indication information is transmission rank indicator (TRI), and the precoding and number of layers indication information may be precoding information and number of layers.

In case that the DMRS ports are DMRS ports corresponding to non-codebook-based PUSCH, the first information may be SRI information, and each piece of SRI information may be an SRI group or a group of SRIs and may be used to indicate multiple SRS resources. The first number of layers corresponding to the DMRS port indication information is determined based on numbers of SRS resources indicated by the N pieces of SRI indication information. For example, the first number of layers corresponding to the DMRS port indication information is the sum of the numbers of SRS resources indicated by the N pieces of SRI indication information.

In an embodiment, determining the first number of layers corresponding to the DMRS port indication information based on the first indication information includes:

determining the first number of layers based on a sum of second numbers of layers corresponding to the N pieces of first information; or

determining the first number of layers based on a sum of numbers of SRS resources corresponding to the N pieces of first information.

In an embodiment, the second number of layers corresponding to one piece of the first information is the number of layers indicated by the first information. For example, the first information is precoding and number of layers indication information, and the second number of layers corresponding to the first information is the number of layers indicated by the first information.

In an embodiment, the number of SRS resources corresponding to one piece of the first information is the number of SRS resources indicated by the first information.

In an embodiment, the first indication information is used to indicate N pieces of first information. The terminal determines the first number of layers corresponding to the DMRS port indication information based on the first indication information, which includes the following schemes.

(1) The terminal determines the first number of layers based on the sum of the second numbers of layers corresponding to the N pieces of first information. In a codebook-based PUSCH transmission scenario, the first information may be precoding and/or number of layers indication information, and a number of transmission layers corresponding to each piece of precoding and/or number of layers indication information is the second number of layers. The terminal determines the first number of layers corresponding to the DMRS port indication information based on the sum of the second numbers of layers corresponding to the N pieces of first information. Further, the terminal determines the first number of layers corresponding to the DMRS port indication information based on the sum of the second numbers of layers corresponding to each of the N pieces of first information.

(2) The terminal determines the first number of layers based on the sum of the numbers of SRS resources corresponding to the N pieces of first information. In a non-codebook-based PUSCH transmission scenario, the first information may be SRI information. Each piece of SRI information indicates multiple SRS resources. The terminal determines the first number of layers corresponding to the DMRS port indication information based on the sum of the numbers of SRS resources corresponding to the N pieces of first information. In an embodiment, the terminal determines the number of layers corresponding to each piece of first information based on the number of SRS resources corresponding to each piece of first information, and then determines the first number of layers corresponding to the DMRS port indication information based on the sum of the numbers of layers corresponding to the N pieces of first information.

In an embodiment, the first number of layers is equal to the sum of the second numbers of layers corresponding to the N pieces of first information; or, the first number of layers is equal to the sum of the numbers of SRS resources corresponding to the N pieces of first information.

In an embodiment, the terminal determines the first number of layers based on the sum of the second numbers of layers corresponding to the N pieces of first information. The first number of layers may be equal to the sum of the numbers of layers corresponding to the N pieces of first information.

The terminal determines the first number of layers based on the sum of the numbers of SRS resources corresponding to the N pieces of first information. The first number of layers may be equal to the sum of the numbers of SRS resources corresponding to the N pieces of first information. Further, the terminal determines the first number of layers based on the sum of the numbers of SRS resources corresponding to each of the N pieces of first information.

In an embodiment, the first number of layers is equal to N times a second number of layers corresponding to one piece of the first information indicated by the first indication information, and/or N times a number of sounding reference signal (SRS) resources corresponding to one piece of the first information indicated by the first indication information.

In an embodiment, the second number of layers and/or the number of SRS resources corresponding to each of the N pieces of first information may be the same. In this case, the first number of layers corresponding to the DMRS port indication information is equal to N times the second number of layers corresponding to one piece of the first information indicated by the first indication information, and/or N times the number of SRS resources.

In an embodiment, the network device indicates one number of transmission layers for PUSCH, and the one number of transmission layers is a number of transmission layers corresponding to a precoding matrix. Then, a sum of the numbers of transmission layers corresponding to N precoding matrices is N times the number of transmission layers.

For example, there are two TPMI fields in DCI, where a first TPMI field indicates one precoding matrix and one number of layers, and a second TPMI field indicates another precoding matrix under the number of layers indicated by the first TPMI field. The sum of the numbers of transmission layers corresponding to the N pieces of precoding and/or number of layers indication information is equal to N times the number of layers indicated by the first TPMI field.

In an embodiment, the network device indicates one number of SRS resources for PUSCH, and the one number of SRS resources is a number of SRS resources corresponding to one SRI field. Then, a sum of the numbers of SRS resources corresponding to N pieces of SRI information is N times the number of SRS resources.

For example, there are two SRI fields in DCI, where a first SRI field indicates one or more SRS resources, and a second SRI field also indicates one or more SRS resources, and a number of SRS resources indicated by the second SRI field is the same as a number of SRS resources indicated by the first SRI field. A sum of the numbers of SRS resources corresponding to N pieces of SRI information is equal to N times the number of SRS resources indicated by the first SRI field.

In an embodiment, the first number of layers is indicated by the network device. In an embodiment, the first number of layers is carried in at least one of the N pieces of first information.

In an embodiment, the sum of the second numbers of layers corresponding to the N pieces of first information and/or the sum of the numbers of SRS resources corresponding to the N pieces of first information is indicated by the network device.

In an embodiment, the network device may indicate one number of transmission layers for PUSCH, the one number of transmission layers is the sum of the second numbers of layers corresponding to the N pieces of first information and/or the sum of the numbers of SRS resources corresponding to the N pieces of first information.

That is, the network device directly indicates the sum of the second numbers of layers corresponding to N pieces of precoding and/or number of layers indication information used for PUSCH transmission, and/or the sum of the numbers of SRS resources corresponding to N pieces of SRI information used for PUSCH transmission. As such, there is no calculation need for the terminal.

In an embodiment, determining the first number of layers based on the sum of the second numbers of layers corresponding to the N pieces of first information includes:

in case that the second number of layers corresponding to i-th first information among the N pieces of first information is $L_i$,

determining the first number of layers as $\sum_{i=1}^{N} L_i$.

In an embodiment, for codebook-based PUSCH, determining the first number of layers based on the sum of the second numbers of layers corresponding to the N pieces of first information may include:

in case that the second number of layers corresponding to the i-th first information among the N pieces of first information (precoding and/or number of layers indication information) is $L_i$, determining that the first number of layers corresponding to the DMRS port indication information or the DMRS port is $\sum_{i=1}^{N} L_i$.

That is, the second numbers of layers corresponding to the N pieces of precoding and/or number of layers indication information are respectively $L_1, L_2, ... , L_N$. Then the first number of layers corresponding to the DMRS port indication information or all determined DMRS ports is $L_1+L_2+...+L_N$.

In an embodiment, determining the first number of layers based on the sum of the numbers of SRS resources corresponding to the N pieces of first information includes:

in case that the number of SRS resources corresponding to i-th first information among the N pieces of first information is

$Q_i$, determining the first number of layers as $\sum_{i=1}^{N} Q_i$.

In an embodiment, for non-codebook-based PUSCH, determining the first number of layers based on the sum of the second numbers of layers corresponding to the N pieces of first information may include:

in case that the number of SRS resources corresponding to the i-th first information among the N pieces of first information (SRI information) is $Q_i$, determining that the first number of layers corresponding to the DMRS port indication information or the DMRS port is $\sum_{i=1}^{N} Q_i$.

That is, the numbers of SRS resources corresponding to the N pieces of SRI information are respectively $Q_1, Q_2, ... , Q_N$. Then the first number of layers corresponding to the DMRS port indication information or all determined DMRS ports is $Q_1+Q_2+...+Q_N$.

In an embodiment, the N pieces of first information are encoded jointly and indicated by one second information field; or

the N pieces of first information are encoded separately and indicated by N third information fields.

In an embodiment, the N pieces of first information may be encoded jointly and indicated by the same second information field.

In an embodiment, N pieces of precoding and/or number of layers indication information are encoded jointly and are indicated by, for example, a precoding information and number of layers field in DCI. That is, the precoding information and number of layers field simultaneously indicate N precoding matrices and N numbers of transmission layers. For another example, they are indicated by an RRC parameter *precodingAndNumberOfLayers.*

In an embodiment, N pieces of SRI information are encoded jointly, and are indicated by, for example, an SRS resource indicator field in DCI. That is, the SRS resource indicator field simultaneously indicates the SRS resources corresponding to N antenna panels/TRPs/codewords/ beams/SRS resource sets. For another example, they are indicated by an RRC parameter *srs-ResourceIndicator.*

In an embodiment, the N pieces of first information are encoded separately and indicated by N third information fields.

In an embodiment, N pieces of precoding and/or number of layers indication information are encoded separately. Taking N=2 as an example, the two pieces of precoding and/or number of layers indication information may be indicated by precoding information and number of layers and second precoding information and number of layers in DCI, which respectively indicate one precoding matrix and number of layers. For another example, RRC parameters *precodingAndNumberOfLayers* and *precodingAndNumberOfLayers2* respectively indicate one precoding matrix and number of layers.

In an embodiment, N pieces of SRI information are encoded separately. Taking N=2 as an example, the two pieces of SRI information may be indicated by an SRS resource indicator and a second SRS resource indicator in DCI, which respectively indicate one SRS resource set. For another example, RRC parameters *srs-ResourceIndicator* and *srs-*

*ResourceIndicator2* respectively indicate one SRS resource set.

In an embodiment, in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by one first information field, where in case that i=1, $L_{i-1}=0$; or

if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by one first information field, where in case that i=1, $Q_{i-1}=0$.

In an embodiment, after the corresponding relationship between the third information field and the DMRS port is determined, the DMRS port transmission may be performed based on the corresponding relationship.

Taking the first information being precoding matrix and/or number of layers indication information as an example, the third information field is an information field used to indicate the precoding matrix and/or number of layers. After the corresponding relationship between the third information field and the DMRS port is determined, in case of transmitting the DMRS corresponding to the DMRS port, the precoding matrix corresponding to the third information field corresponding to the DMRS port is used for transmission.

Taking the first information being SRS resource indication information as an example, the third information field is an information field used to indicate SRS resources. After the corresponding relationship between the third information field and the DMRS port is determined, in case of transmitting the DMRS corresponding to the DMRS port, the precoding matrix of the SRS resource corresponding to the third information field corresponding to the DMRS port is used for transmission. For example, it is determined that a certain information field indicates SRS resource 1 and SRS resource 2, and it is determined that the SRS resource 1 and SRS resource 2 correspond to DMRS port 1 and DMRS port 2 respectively. Then, in case of transmitting DMRSs corresponding to DMRS port 1 and DMRS port 2, the precodings corresponding to SRS resource 1 and SRS resource 2 are respectively used for transmission.

In an embodiment, in case that the N pieces of first information are encoded separately and indicated by N third information fields, there are two situations.

(1) In case that a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by one first information field, where in case that i=1, $L_{i-1}=0$.

For codebook-based PUSCH transmission, the first information may be precoding and/or number of layers indication information, the N pieces of first information are respectively indicated by N third information fields, and then the i-th third information field among the N third information fields corresponds to $(L_{i-1}+1)$-th DMRS port to $(L_{i-1}+L_i)$-th DMRS port indicated by one first information field used for indicating DMRS port.

That is, the serial numbers of the N third information fields are respectively 1 to N, and then the first $L_1$ DMRS ports indicated by one information field indicating the DMRS port indication information correspond to the 1-st third information field, the $(L_1+1)$-th to $(L_1+L_2)$-th DMRS ports correspond to the 2-nd third information field, and so on, and the final $L_N$ DMRS ports correspond to the N-th third information field.

(2) In case that a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by one first information field, where in case that i=1, $Q_{i-1}=0$.

For non-codebook-based PUSCH transmission, the first information may be SRI information, the N pieces of first information are respectively indicated by N third information fields, and then the i-th third information field among the N third information fields corresponds to $(L_{i-1}+1)$-th DMRS port to $(L_{i-1}+L_i)$-th DMRS port indicated by one first information field used for indicating DMRS port.

That is, the serial numbers of the N third information fields are respectively 1 to N, and then the first $L_1$ DMRS ports indicated by one information field indicating the DMRS port indication information correspond to the 1-st third information field, the $(L_1+1)$-th to $(L_1+L_2)$-th DMRS ports correspond to the 2-nd third information field, and so on, and the final $L_N$ DMRS ports correspond to the N-th third information field.

In an embodiment, in case that the first information is precoding and/or number of layers indication information, if the second number of layers corresponding to the i-th first information among the N pieces of first information is $L_i$, the precoding matrix and/or layer indicated by the i-th first information corresponds to $(L_{i-1}+1)$-th DMRS port to $(L_{i-1}+L_i)$-th DMRS port indicated by one first information field, where in case that i=1, $L_{i-1}=0$.

In an embodiment, for codebook-based PUSCH transmission, the first information may be precoding and/or number of layers indication information, whether the N pieces of first information is encoded jointly or encoded separately, if the second number of layers corresponding to the i-th first information among the N pieces of first information is $L_i$, the precoding matrix and/or layer indicated by the i-th first information corresponds to $(L_{i-1}+1)$-th DMRS port to $(L_{i-1}+L_i)$-th DMRS port indicated by one first information field used for indicating the DMRS port indication information, where in case that i=1, $L_{i-1}=0$.

If the second numbers of layers corresponding to N pieces of precoding and/or number of layers indication information are respectively $L_1, L_2, ... , L_N$, the first $L_1$ DMRS ports indicated by one information field indicating the DMRS port indication information correspond to the precoding matrix and/or layer indicated by the 1-st precoding and/or number of layers indication information. The $(L_1+1)$-th to $(L_1+L_2)$-th DMRS ports correspond to the precoding matrix and/or layer indicated by the 2-nd precoding and/or number of layers indication information. By analogy, the final $L_N$ DMRS ports correspond to the precoding matrix and/or layer indicated by the N-th precoding and/or number of layers indication information.

In an embodiment, in case that the first information is SRI information, if the number of SRS resources corresponding to the i-th first information among the N pieces of first information is $Q_i$, the SRS resources indicated by the i-th first information correspond to $(Q_{i-1}+1)$-th DMRS port to $(Q_{i-1}+Q_i)$-th DMRS port indicated by one first information field, where in case that i=1, $Q_{i-1}=0$.

In an embodiment, for non-codebook-based PUSCH transmission, the first information may be SRI information, whether the N pieces of first information is encoded jointly or encoded separately, if the number of SRS resources corresponding to the i-th first information among the N pieces of first information is $Q_i$, the number of SRS resources indicated by the i-th first information corresponds to $(Q_{i-1}+1)$-th DMRS port to $(Q_{i-1}+Q_i)$-th DMRS port indicated by one first information field indicating the DMRS port indication information, where in case that i=1, $Q_{i-1}=0$.

If the second numbers of layers corresponding to N pieces of SRI information are respectively $Q_1, Q_2, ... , Q_N$, the first $Q_1$ DMRS ports indicated by one information field indicating the DMRS port correspond to the SRS resources indicated by the 1-st SRI information. The $(Q_1+1)$-th to $(Q_1+Q_2)$-th DMRS ports correspond to the SRS resources indicated by the 2-nd SRI information. By analogy, the final $L_N$ DMRS ports correspond to the SRS resources indicated by the N-th SRI information.

In an embodiment, the DMRS ports corresponding to any two pieces of first information among the N pieces of first information are DMRS ports in different code division multiplexing (CDM) groups.

In an embodiment, the DMRS ports corresponding to any two pieces of first information among the N pieces of first information are DMRS ports in different CDM groups. That is, all DMRS ports determined by the terminal may be distinguished by CDM groups, and each CDM group corresponds to one piece of first information.

Taking N=2 as an example, if the second numbers of layers corresponding to the two pieces of precoding and/or number of layers indication information are $L_1$ and $L_2$ respectively, the first information field used to indicate the DMRS port indication information indicates $L_1+L_2$ DMRS ports, where $L_1$ DMRS ports are antenna ports in one CDM group, and $L_2$ DMRS ports are antenna ports in another CDM group.

Taking N=2 as an example, if the numbers of SRS resources corresponding to the two pieces of SRI information are $Q_1$ and $Q_2$ respectively, the first information field used to indicate the DMRS port indication information indicates $Q_1+Q_2$ DMRS ports, where $Q_1$ DMRS ports are antenna ports in one CDM group, and $Q_2$ DMRS ports are antenna ports in another CDM group.

In an embodiment, in case that one first indicator field corresponds to N CDM groups and the second numbers of layers and/or the numbers of SRS resources corresponding to the N pieces of first information are different, the i-th first information among the N pieces of first information corresponds to the j-th CDM group among the N CDM groups. The number of DMRS ports included in the j-th CDM group is equal to the second number of layers or the number of SRS resources corresponding to the i-th first information.

In an embodiment, in case that one first indicator field used to indicate the DMRS port indication information corresponds to N CDM groups and the second numbers of layers and/or the numbers of SRS resources corresponding to the N pieces of first information are different, the N pieces of first information and N CDM groups may correspond to each other one to one. For example, the i-th first information among the N pieces of first information corresponds to the j-th CDM group among the N CDM groups, and further, the second number of layers or the number of SRS resources corresponding to the i-th first information is the same as the number of DMRS ports included in the j-th CDM group.

Taking N=2 as an example, if the second numbers of layers corresponding to the two pieces of precoding and/or number of layers indication information are $L_1$ and $L_2$ respectively, the first information field used to indicate the DMRS port indication information indicates $L_1$ and $L_2$ DMRS ports, where $L_1$ DMRS ports are antenna ports in CDM group 1, and $L_2$ DMRS ports are antenna ports in CDM group 2, and then $L_1$ DMRS ports in CDM group 1 correspond to the precoding and/or number of layers with the number of transmission layers $L_1$, and $L_2$ DMRS ports in CDM group 2 correspond to the precoding and/or number of layers with the number of transmission layers $L_2$.

Taking N=2 as an example, if the numbers of SRS resources indicated by the two SRI fields are $Q_1$ and $Q_2$ respectively, the first information field used to indicate the DMRS port indication information indicates $Q_1$ and $Q_2$ DMRS

ports, where $Q_1$ DMRS ports are antenna ports in CDM group 1, and $Q_2$ DMRS ports are antenna ports in CDM group 2, and then $Q_1$ DMRS ports in CDM group 1 correspond to the SRI field with the number of SRS resources $Q_1$, and $Q_2$ DMRS ports in another CDM group correspond to the SRI field with the number of SRS resources $Q_2$.

In the method for determining DMRS port provided by the embodiments of the present application, regardless of whether the number of layers corresponding to the two TRPs/antenna panels is $(L_1, L_2)$ or $(L_2, L_1)$, the same state may be used to indicate $L_1$ DMRS ports in one CDM group and $L_2$ DMRS ports in another CDM group, which further reduces the overhead for indicating DMRS port.

In an embodiment, determining the DMRS ports based on the DMRS port indication information and the first indication information includes:

determining CDM groups corresponding to the N pieces of first information based on the DMRS port indication information, where the CDM groups and second information have an association relationship; and

determining the DMRS ports corresponding to the second information based on the association relationship,

where the association relationship is indicated by the network device or predefined by a protocol, and the second information includes one or more of the following: codeword; beam; antenna panel; TRP; precoding matrix; precoding and/or number of layers field; transmission configuration indicator (TCI) state; control resource set pool index (CORESETPoolIndex); SRS resource set; or, SRS resource indicator field.

In an embodiment, there is an association relationship between the CDM groups and the second information. The second information may be one or more of the following: codeword; beam; antenna panel; TRP; precoding matrix; precoding and/or number of layers field; TCI state; CORESETPoolIndex; SRS resource set; or, SRS resource indicator field. The association relationship may be predefined by the protocol or indicated by the network device.

Step 102: determining the DMRS ports based on the DMRS port indication information and the first indication information, which may include:
determining CDM groups corresponding to the N pieces of first information based on the DMRS port indication information, and determining DMRS ports corresponding to second information based on an association relationship between the CDM groups and the second information.

In an embodiment, for the aforementioned $L_1$ and $L_2$, $Q_1$ and $Q_2$, if $L_1=L_2$, it means that the CDM group has an association relationship with the precoding and/or number of layers. $Q_1=Q_2$ indicates that the CDM group has an association relationship with the SRI field. For example, the DMRS ports corresponding to the CDM group with a relatively small serial number correspond to the 1-st precoding matrix/precoding and/or number of layers field/SRI field, TCI state/SRS resource set/antenna panel/codeword/TRP/beam/CORESETPoolIndex, and the CDM group with a relatively larger serial number corresponds to the 2-nd precoding matrix/precoding and/or number of layers field/SRI field, TCI state/SRS resource set/antenna panel/codeword/TRP/beam/CORESETPoolIndex.

In an embodiment, the method for determining DMRS port provided by the embodiments of the present application further includes:
determining the association relationship between the DMRS ports and the second information based on the CDM group corresponding to the DMRS ports, where the second information includes one or more of the following:

a codeword;

a beam;

an antenna panel;

a TRP;

a precoding matrix;

a precoding and/or number of layers field;

a TCI state;

a CORESETPoolIndex; or

an SRS resource set.

In an embodiment, the association relationship between the DMRS ports and the second information may be determined based on the CDM group corresponding to the DMRS ports. The second information may be one or more of the following: codeword; beam; antenna panel; TRP; precoding matrix; precoding and/or number of layers field; TCI state; CORESETPoolIndex; SRS resource set; or, SRS resource indicator field.

In an embodiment, the association relationship between the DMRS ports and the second information is determined based on the number of DMRS ports included in the CDM group corresponding to the DMRS port and the number of layers or the number of SRS resources corresponding to each of the N pieces of first information.

In an embodiment, for the first information corresponding to one piece of the second information, the number of layers or the number of SRS resources corresponding to the first information is equal to X, and then the DMRS ports corresponding to the second information are the DMRS ports in the CDM group indicating X DMRS ports, where X is an integer greater than or equal to 1.

Taking N=2 as an example, if the second numbers of layers corresponding to the two pieces of precoding and/or number of layers indication information are $L_1$ and $L_2$ respectively, the first information field used to indicate the DMRS port indication information indicates $L_1+L_2$ DMRS ports, where $L_1$ DMRS ports are antenna ports in CDM group 1 and $L_2$ DMRS ports are antenna ports in CDM group 2, and then $L_1$ DMRS ports in CDM group 1 correspond to TCI state/SRS resource set/antenna panel/codeword/TRP/beam/CORESETPoolIndex corresponding to the precoding and/or number of layers indicator with a number of transmission layers $L_1$, and L2 DMRS ports in CDM group 2 correspond to TCI state/SRS resource set/antenna panel/codeword/TRP/beam/CORESETPoolIndex corresponding to the precoding and/or number of layers indicator with a number of transmission layers $L_2$.

Taking N=2 as an example, if the numbers of SRS resources indicated by the two SRI fields are $Q_1$ and $Q_2$ respectively, the first information field used to indicate the DMRS port indication information indicates $Q_1+Q_2$ DMRS ports, where $Q_1$ DMRS ports are the antenna ports in CDM group 1, and $Q_2$ DMRS ports are the antenna ports in CDM group 2, and then the $Q_1$ DMRS ports in CDM group 1 correspond to TCI state/SRS resource set/antenna panel/codeword/TRP/-beam/CORESETPoolIndex corresponding to the SRI field with the number of SRS resources $Q_1$, and the $Q_2$ DMRS ports in another CDM group correspond to TCI state/SRS resource set/antenna panel/codeword/TRP/beam/CORESETPoolIndex corresponding to the SRI field with the number of SRS resources $Q_2$.

In an embodiment, in case that the N pieces of first information are encoded separately and indicated by N third information fields, the third information field is an information field in DCI, or a valid information field in DCI. In an embodiment, the number N is equal to the number of valid information fields in DCI.

For example, the N pieces of precoding indication information are encoded separately, the third information field is a TPMI field, and N TPMI fields are TPMI fields included in DCI. Further, the TPMI field is a valid TPMI field in DCI, that is, unused TPMI field is not included.

For example, N pieces of number of layers indication information are encoded separately, the third information field is a TRI field, and N TRI fields are TRI fields included in DCI. Further, the TRI field is a valid TRI field in DCI, that is, unused TRI field is not included.

For example, N SRIs are encoded separately, the third information field is an SRI field, and N SRI fields are SRI fields included in DCI. Further, the SRI field is a valid SRI field in DCI, that is, unused SRI field is not included.

In an embodiment, determining the DMRS ports based on the first number of layers and the DMRS port indication information includes:

determining a DMRS indication table based on the first number of layers; and

determining the DMRS ports based on the DMRS indication table and the DMRS port indication information.

In an embodiment, determining the DMRS ports based on the first number of layers corresponding to the DMRS port indication information and the DMRS port indication information may include:
determining the DMRS indication table based on the first number of layers, that is, determining a table corresponding to the first number of layers, where the DMRS indication table may be referred to Table 1; and then determining the DMRS ports based on the DMRS indication table and DMRS port indication information, where the content indicated by the DMRS port indication information may be determined based on the DMRS indication table.

In an embodiment, all DMRS ports indicated by the one first information field correspond to the same DMRS port configuration information.

In an embodiment, the DMRS port indication information is indicated by one first information field, and finally multiple DMRS ports for PUSCH transmission in multi-antenna panels/MTRPs scenario are determined. All DMRS ports indicated by the first information field correspond to the same DMRS port configuration information, which may further reduce the overhead for indicating the DMRS port.

In an embodiment, the DMRS port configuration information is used to configure one or more of the following:

a DMRS type; or

a maximum number of front-loaded DMRS symbols.

In an embodiment, the DMRS port configuration information may be used to configure the DMRS type, maximum number of front-loaded DMRS symbols, etc., of the DMRS port.

In an embodiment, the first information is used to indicate one or more of the following:

a codeword;

a beam;

an antenna panel;

a TRP;

a precoding matrix;

a TCI state;

a resource set; or

a CORESETPoolIndex.

In an embodiment, the first information may be precoding and/or number of layers indication information or SRI information, and the first information may correspond to one or more of the following: codeword/beam/antenna panel/TRP/precoding matrix/TCI state/resource set/CORESETPoolIndex. The N pieces of first information respectively correspond to N codewords/beams/antenna panels/TRPs/precoding matrices/TCI states/resource sets/ CORESETPoolIndexes.

In an embodiment, the first indication information indicates at least one of N precoding matrices or M numbers of layers and N groups of SRS resources, where N is an integer greater than 1, and M is an integer greater than or equal to 1. In case that M is 1, it indicates that the indicated number of layers is applicable to N precoding matrices or N groups of SRS resources, and it is the number of layers corresponding to each precoding matrix or each group of SRS resources, or the number of layers corresponding to all precoding matrices or all SRS resources.

In an embodiment, determining the DMRS ports based on the first indication information and the DMRS port indication information includes:

determining the first number of layers corresponding to the DMRS ports based on at least one of N precoding matrices, M numbers of layers, or N groups of SRS resources; and

determining the DMRS ports based on the first number of layers and the DMRS port indication information.

In an embodiment, determining the first number of layers corresponding to the DMRS ports based on at least one of N precoding matrices, M numbers of layers, or N groups of SRS resources includes any of the following:

(1) determining the first number of layers based on the sum of the numbers of layers corresponding to the N precoding matrices; further, the first number of layers is determined based on the sum of the number of layers corresponding to each of the N precoding matrices; further, the first number of layers is equal to the sum of the numbers of layers corresponding to the N precoding matrices;

(2) determining the first number of layers based on the sum of the numbers of layers corresponding to the N groups of SRS resources; further, the first number of layers is determined based on the sum of the number of layers corresponding to each of the N groups of SRS resources; further, the first number of layers is equal to the sum of the third numbers of layers corresponding to the N groups of SRS resources;

(3) determining the first number of layers based on the sum of the M numbers of layers; further, the first number of layers is equal to the sum of the M numbers of layers; or

(4) determining the first number of layers based on the total number of SRS resources included in the N groups of SRS resources; further, the first number of layers is determined based on the sum of the numbers of SRS resources included in each of the N groups of SRS resources; further, the first number of layers is equal to the sum of the numbers of SRS resources included in each of the N groups of SRS resources.

In the method for determining DMRS port provided by the embodiments of the present application, the terminal determines the DMRS ports based on the DMRS port indication information indicated by one first information field and the first indication information indicating N pieces of first information, where the DMRS port indication information and the first indication information are transmitted from the network device. As such, one information field is used to jointly indicate the DMRS ports for N TRPs or antenna panels to achieve PUSCH repetition, which improves the transmission rate of PUSCH, and also reduces the overhead for indicating the DMRS port.

FIG. 2 is a second schematic flowchart of a method for determining demodulation reference signal (DMRS) port according to an embodiment of the present application. As shown in FIG. 2, the method is performed by a network device, such as a base station, etc. The method at least includes the following steps:

step 201: transmitting DMRS port indication information and first indication information to a terminal, where the DMRS port indication information is indicated by one first information field, the first indication information is used to indicate N pieces of first information, and N is an integer greater than 1; and

step 202: receiving DMRSs transmitted from the terminal, where DMRS ports corresponding to the DMRSs are indicated by the DMRS port indication information and the first indication information.

In an embodiment, in a scenario with multiple transmission/reception points (MTRPs) or multiple antenna panels, for a PUSCH, the network device transmits the first indication information and DMRS port indication information to the terminal. The DMRS port indication information is indicated by one first information field, that is, indicated by one information field. The DMRS port indication information or the one first information field is used to indicate DMRS ports for N antenna panels or TRPs respectively .

The first indication information is used to indicate N pieces of first information, where N is an integer greater than 1. The first information is, for example, precoding and/or number of layers indication information, SRI information, etc. In an embodiment, the first information may be one piece of information (for example, one piece of precoding and/or number of layers indicator) or multiple pieces of information (SRI group, used to indicate multiple SRS resources). The first information is used to determine the number of transmission layers (which may also be called rank), and the N pieces of first information are used to determine N pieces of the number of transmission layers.

In an embodiment, the first indication information includes one piece of the first information (such as precoding and/or number of layers indicator), and the first information is applicable to each of the N pieces of first information. In an embodiment, the first indication information includes one piece of the first information (such as an SRI group), which is applicable to the N pieces of first information. For example, the first indication information indicates the sum of the numbers of layers corresponding to N precoding matrices.

The terminal determines the DMRS ports based on the first indication information and the DMRS port indication information, and transmits the DMRSs corresponding to the DMRS ports to the network device.

In the method for determining DMRS port provided by the embodiments of the present application, the network device transmits the DMRS port indication information indicated by one first information field and the first indication information used to indicate N pieces of first information to the terminal, and then the terminal determines the DMRS ports. As such, one information field is used to jointly indicate the DMRS ports for N TRPs or antenna panels to achieve PUSCH repetition, which improves the transmission rate of PUSCH, and also reduces the overhead for indicating the DMRS port.

In an embodiment, the DMRS ports correspond to a first number of layers and the DMRS port indication information, the first number of layers is a number of layers corresponding to the DMRS port indication information, and the first number of layers is indicated by the first indication information. That is, the first indication information may be used to indicate the first number of layers, and the terminal may determine the DMRS ports based on the first number of layers indicated by the first indication information and the DMRS port indication information.

In an embodiment, a way of indicating the first number of layers by the first indication information is: the first indication information indicates a second number of layers corresponding to the first information, where the first number of layers has a corresponding relationship with the second number of layers corresponding to the first information indicated by the first indication information, and then the terminal may determine the first number of layers by determining the second number of layers corresponding to the first information.

In an embodiment, another way of indicating the first number of layers by the first indication information is: the first information indicated by the first indication information indicates a second number of layers, where the first number of layers has a corresponding relationship with the second number of layers, and then the terminal may determine the first number of layers based on the second number of layers indicated by the first information.

In an embodiment, another way of indicating the first number of layers by the first indication information is: the first information indicated by the first indication information indicates SRS resources, where the first number of layers has a corresponding relationship with the number of SRS resources, and then the terminal may determine the first number of layers based on the number of SRS resources corresponding to the first information.

In an embodiment, the above corresponding relationship is a function or operation relationship. For example, it is a sum operation. For another example, it is a multiplication operation (for example, multiplying by N times), etc. Some examples of functional relationship are: the first number of layers is a function of the second number of layers; or, the first number of layers is a function of the number of SRS resources.

In an embodiment, the first number of layers corresponds to a sum of second numbers of layers corresponding to the N pieces of first information; or, the first number of layers corresponds to a sum of numbers of SRS resources corresponding to the N pieces of first information.

In an embodiment, in case that the DMRS ports are DMRS ports corresponding to codebook-based PUSCH, the first information is precoding and/or number of layers indication information, and the first number of layers corresponds to a number of transmission layers indicated by the precoding and/or number of layers indication information; and/or in case that the DMRS ports are DMRS ports corresponding to non-codebook-based PUSCH, the first information is SRI information, and the first number of layers corresponds to a number of SRS resources indicated by the SRI information.

In an embodiment, the first number of layers is equal to the sum of the second numbers of layers corresponding to the N pieces of first information, or the first number of layers is equal to the sum of the numbers of SRS resources corresponding to the N pieces of first information.

In an embodiment, the first number of layers is equal to N times a second number of layers corresponding to one piece of first information indicated by the first indication information, and/or N times a number of sounding reference signal (SRS) resources corresponding to one piece of first information indicated by the first indication information.

In an embodiment, the method for determining DMRS port provided by the embodiments of the present application further includes:
indicating a sum of second numbers of layers corresponding to the N pieces of first information and/or a sum of numbers of SRS resources corresponding to the N pieces of first information to the terminal. That is, the sum of second numbers of layers corresponding to the N pieces of first information and/or the sum of the numbers of SRS resources corresponding to the N pieces of first information is indicated by the network device.

In an embodiment, in case that a second number of layers corresponding to i-th first information among the N pieces of first information is $L_i$, the first number of layers is $\sum_{i=1}^{N} L_i$.

In an embodiment, in case that a number of SRS resources corresponding to i-th first information among the N pieces of first information is $Q_i$, the first number of layers is $\sum_{i=1}^{N} Q_i$.

In an embodiment, in case that the first information is precoding and/or number of layers indication information, if the second number of layers corresponding to the i-th first information among the N pieces of first information is $L_i$, the precoding matrix and/or layer indicated by the i-th first information corresponds to $(L_{i-1}+1)$-th DMRS port to $(L_{i-1}+L_i)$-th DMRS port indicated by the one first information field, where in case that i=1, $L_{i-1}=0$; and/or in case that the first information is SRI information, if the number of SRS resources corresponding to the i-th first information among the N pieces of first information is $Q_i$, the SRS resources indicated by the i-th first information correspond to $(Q_{i-1}+1)$-th DMRS port to $(Q_{i-1}+Q_i)$-th DMRS port indicated by the one first information field, where in case that i=1, $Q_{i-1}=0$.

In an embodiment, the method for determining DMRS port provided by the embodiments of the present application further includes:

performing joint encoding on the N pieces of first information, and indicating the N pieces of first information by one second information field; or

performing independent encoding on the N pieces of first information, and indicating the N pieces of first information by N third information fields.

In an embodiment, in case that the N pieces of first information are encoded separately and indicated by N third information fields:

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, where in case that i=1, $L_{i-1}=0$; or

if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, where in case that i=1, $Q_{i-1}=0$.

In an embodiment, DMRS ports corresponding to any two pieces of the first information among the N pieces of first information are DMRS ports in different code division multiplexing (CDM) groups.

In an embodiment, in case that one first indicator field corresponds to N CDM groups and the second numbers of layers and/or the numbers of SRS resources corresponding to the N pieces of first information are different, the i-th first information among the N pieces of first information corresponds to the j-th CDM group among the N CDM groups. The number of DMRS ports included in the j-th CDM group is equal to the second number of layers or the number of SRS resources corresponding to the i-th first information.

In an embodiment, the method for determining DMRS port provided by the embodiments of the present application further includes:

transmitting an association relationship between CDM groups and second information to the terminal, where the second information includes one or more of the following:

a codeword;

a beam;

an antenna panel;

a TRP;

a precoding matrix;

a precoding and/or number of layers field;

a TCI state;

a CORESETPoolIndex; or

an SRS resource set.

In an embodiment, the first number of layers is used to determine a DMRS indication table, and the DMRS indication table is used to determine the DMRS ports.

In an embodiment, all DMRS ports indicated by the one first information field correspond to the same DMRS port configuration information.

In an embodiment, the DMRS port configuration information is used to configure one or more of the following:

a DMRS type; or

a maximum number of front-loaded DMRS symbols.

In an embodiment, the first information is used to indicate one or more of the following:

a codeword;

a beam;

an antenna panel;

a TRP;

a precoding matrix;

a TCI state;

a resource set; or

a CORESETPoolIndex.

It should be noted that the methods provided by each embodiment of the present application are based on the same conception. The implementations and beneficial effects of the methods for the terminal side and network device side may be referred to each other, and repeated details are not repeated.

The solutions in the embodiments of the present application are further introduced below through several examples.

Example I: N=2, the UE is scheduled to transmit a PUSCH, and the scheduling information indicates two precoding matrices for the PUSCH.

In an embodiment, the scheduling is DCI-based scheduling, and the scheduling information is scheduling information indicated by DCI. In an embodiment, the scheduling is RRC signaling-based scheduling, and the scheduling information is information configured by RRC signaling. In an embodiment, the scheduling is MAC-CE signaling-based scheduling, and the scheduling information is information indicated by MAC-CE signaling.

In an embodiment, each of the two precoding matrices corresponds to one or more of a TRP/antenna panel/TCI state/SRS resource set/codeword/beam/CORESETPoolIndex.

In the following, DCI-based scheduling is taken as an example, and it may be extended to RRC signaling-based scheduling, or MAC-CE signaling-based scheduling, etc.

The UE may transmit the PUSCH through two groups of antennas, and different groups of antennas correspond to two precoding matrices respectively. For example, PUSCH transmission may be that the UE performs transmission to the same TRP through two antenna panels, or the UE performs transmission to two different TRPs through two antenna panels; each of the two antenna panels corresponds to one precoding matrix.

In an embodiment, the two precoding matrices are indicated by the same information field (e. g. precoding information and number of layers).

In an embodiment, the two precoding matrices are indicated by two TPMI fields (e. g. precoding information and number of layers and second precoding information and number of layers) included in the DCI.

In an embodiment, the DCI indicates one number of transmission layers for the PUSCH, and the number of transmission layers is encoded jointly with one of the precoding matrices; or, the number of transmission layers is encoded separately, that is, indicated by one specific information field. In an embodiment, both precoding matrices should correspond to the number of transmission layers. That is, the numbers of transmission layers corresponding to the two precoding matrices are the same. In an embodiment, the sum of the numbers of transmission layers corresponding to the two precoding matrices is the number of transmission layers.

In an embodiment, DCI indicates two numbers of transmission layers for the PUSCH, and the two numbers of transmission layers are encoded jointly with two precoding matrices respectively (that is, one piece of precoding information and number of layers field indicates one precoding matrix and one number of transmission layers); or, the two numbers of transmission layers are encoded separately, for example, one specific information field indicates the two numbers of transmission layers.

Some indication methods for precoding matrix and number of transmission layers are as follows.

In an embodiment, two precoding matrices are indicated by two information fields, and the two information fields both indicate the precoding matrix and the number of transmission layers simultaneously, and then the rank corresponding to the DMRS port indication information is equal to the sum of the numbers of transmission layers indicated by the two information fields.

In an embodiment, two precoding matrices are indicated by two information fields, and one of these information fields indicates the number of transmission layers corresponding to one precoding matrix, and then the rank corresponding to the DMRS port indication information is equal to N times the number of transmission layers indicated by this information field.

In an embodiment, the two precoding matrices are indicated by the same information field, and this information field indicates two numbers of transmission layers, and then the rank corresponding to the DMRS port indication information is equal to the sum of the two numbers of transmission layers indicated by this information field.

In an embodiment, the two precoding matrices are indicated by the same information field, and this information field indicates one number of transmission layers, which is the sum of the numbers of transmission layers of the two precoding matrices, and then the rank corresponding to the DMRS port indication information is equal to the number of transmission layers indicated by this information field.

In an embodiment, there is one information field used to indicate the number of transmission layers in the DCI. This information field indicates the sum of the numbers of transmission layers of the two precoding matrices, and then the rank corresponding to the DMRS port indication information is equal to the number of transmission layers indicated by this information field.

In an embodiment, there is one information field used to indicate the number of transmission layers in the DCI. This information field indicates the number of layers corresponding to each of the numbers of transmission layers of the two precoding matrices, and then the rank corresponding to the DMRS port indication information is equal to the sum of the two numbers of layers indicated by this information field.

In an embodiment, in case that DCI indicates two numbers of transmission layers, each number of transmission layers corresponds to one or more of a precoding matrix/SRI field/TCI state/SRS resource set/antenna panel/codeword/TRP/beam/CORESETPoolIndex.

The number of DMRS ports for the PUSCH is equal to the number of transmission layers corresponding to the DMRS port indication information. Each DMRS port for the PUSCH corresponds to each layer for the PUSCH one-to-one.

In an embodiment, one information field in the DCI indicates the DMRS port corresponding to PUSCH transmission (for example, an antenna port field). The rank corresponding to the DMRS port indication information is equal to the sum of the numbers of transmission layers corresponding to the two precoding matrices indicated by the DCI.

The numbers of transmission layers corresponding to the two precoding matrices are L1 and L2 respectively, and then the number of transmission layers corresponding to the DMRS port is L1+L2.

In an embodiment, the first L1 ports indicated by the information field used to indicate the DMRS port correspond to the first precoding matrix, and the (L1+1)-th port to (L1+L2)-th port correspond to the second precoding matrix.

In an embodiment, the first L1 ports indicated by the information field used to indicate the DMRS port correspond to TCI state/SRS resource set/antenna panel/codeword/TRP/beam/ CORESETPoolIndex corresponding to the first precoding matrix. The remaining DMRS ports correspond to TCI state/SRS resource set/antenna panel/codeword/TRP/-beam/ CORESETPoolIndex corresponding to another precoding matrix.

In an embodiment, DMRS ports corresponding to different precoding matrices belong to different CDM groups.

Assuming that the numbers of transmission layers corresponding to the two precoding matrices are L1 and L2 respectively, then the number of transmission layers corresponding to the DMRS ports is L1+L2, and the information field used to indicate the antenna port indicates L1+L2 DMRS ports, where the CDM group corresponding to the L1 DMRS ports is different from the CDM group corresponding to the other L2 DMRS ports. For example, the L1 DMRS ports correspond to one CDM group, and the L2 DMRS ports correspond to another CDM group.

In an embodiment, the DMRS port corresponding to the precoding matrix is determined based on the CDM group corresponding to the DMRS port. For example, if the L1 DMRS ports indicated by the information field used to indicate DMRS ports are antenna ports in one CDM group, and L2 DMRS ports are antenna ports in another CDM group, then L1 DMRS ports in the same CDM group correspond to the precoding matrix with the number of transmission layers L1, and L2 DMRS ports in another CDM group correspond to the precoding matrix with the number of transmission layers L2.

In an embodiment, the association relationship between the DMRS port and the TCI state/SRS resource set/antenna panel/codeword/TRP/beam/CORESETPoolIndex is determined based on the CDM group corresponding to the DMRS port. For example, if the L1 DMRS ports indicated by the information field used to indicate DMRS ports are antenna ports in one CDM group, and the other L2 DMRS ports are antenna ports in another CDM group, then L1 DMRS ports in the same CDM group correspond to the TCI state/SRS resource set/antenna panel/codeword/TRP/beam/CORESETPoolIndex corresponding to the precoding and/or number of layers indicator with the number of transmission layers L1, and L2 DMRS ports in another CDM group correspond to the TCI state/SRS resource set/antenna panel/codeword/TRP/beam/ CORESETPoolIndex corresponding to the precoding and/or number of layers indicator with the number of transmission layers L2.

In an embodiment, the CDM group has a predefined association relationship with the precoding matrix/precoding and/or number of layers field/SRI field/TCI state/SRS resource set/antenna panel/codeword/TRP/beam/CORESETPoolIndex; or, the association relationship is indicated by the network side. For example, the DMRS ports corresponding to the CDM group with a relatively small serial number correspond to the first precoding matrix/precoding and/or number of layers field/SRI field/TCI state/SRS resource set/antenna panel/codeword/TRP/beam/ CORESETPoolIndex, and the CDM group with a relatively large serial number corresponds to the second precoding matrix/precoding and/or number of layers field/SRI field/TCI state/SRS resource set/antenna panel/codeword/TRP/beam/CORESETPoolIndex; or, the CDM group with a relatively large serial number corresponds to the first precoding matrix/precoding and/or number of layers field/SRI field/TCI state/SRS resource set/antenna panel/codeword/TRP/beam/ CORESETPoolIndex, and the CDM group with a relatively small serial number corresponds to the second precoding matrix/precoding and/or number of layers field/SRI field/TCI state/SRS resource set/antenna panel/codeword/TRP/beam/CORESETPoolIndex.

In an embodiment, the precoding and/or number of layers indicator fields are all precoding and/or number of layers indicator fields included in the DCI; or, the precoding and/or number of layers indicator fields are valid precoding and/or number of layers indicator fields in the DCI. For example, the TPMI field/TRI field is the TPMI field/TRI field included in the DCI. The TPMI field/TRI field is valid TPMI field/TRI field, that is, unused TPMI/TRI field is not included. In an embodiment, the value of N is equal to the number of valid precoding and/or number of layers indicator fields in the DCI.

In an embodiment, determining the DMRS ports based on the number of transmission layers corresponding to the DMRS port indication information includes: determining a DMRS allocation table corresponding to the DMRS port indication information based on the number of transmission layers corresponding to the DMRS port indication information, and further determining the content indicated by the DMRS port indication information, and then determining the DMRS ports.

In an embodiment, the PUSCH is configured as codebook-based PUSCH transmission, and is indicated as the following space division multiplexing (SDM) scheme: two TRPs/antenna panels respectively correspond to different layers/DMRS ports for the PUSCH, and two TRPs/UE antenna panels perform precoding and transmission separately corresponding to different layers/DMRS ports.

Example II: N=2, the UE is scheduled to transmit PUSCH, and the scheduling information indicates two groups of SRIs for the PUSCH.

In an embodiment, the scheduling is DCI-based scheduling, and the scheduling information is scheduling information indicated by DCI. In an embodiment, the scheduling is RRC signaling-based scheduling, and the scheduling information is information configured by RRC signaling. In an embodiment, the scheduling is MAC-CE signaling-based scheduling, and the scheduling information is information indicated by MAC-CE signaling.

In an embodiment, each of the two groups of SRIs corresponds to one or more of a TRP/antenna panel/TCI state/SRS resource set/codeword/beam/CORESETPoolIndex.

In the following, DCI-based scheduling is taken as an example, and it may be extended to RRC signaling-based scheduling, MAC-CE signaling-based scheduling, etc.

The UE may transmit the PUSCH through two groups of antennas, and different groups of antennas correspond to two groups of SRIs respectively. For example, PUSCH transmission may be that the UE performs transmission to the same TRP through two antenna panels, or the UE performs transmission to two different TRPs through two antenna panels; each of the two antenna panels corresponds to one precoding matrix.

In an embodiment, the two groups of SRIs are indicated by the same information field (e. g. precoding information and number of layers).

In an embodiment, the two groups of SRIs are indicated by two TPMI fields (e. g. SRS resource indicator and second SRS resource indicator) included in the DCI.

In an embodiment, the DCI indicates one number of transmission layers for the PUSCH, and the number of transmission layers is encoded jointly with one of the two groups of SRIs (for example, it is equal to the number of SRS resources indicated by one group of SRIs); or, the number of transmission layers is encoded separately, that is, indicated by one specific information field. In an embodiment, the two groups of SRIs should correspond to the number of transmission layers. That is, the numbers of transmission layers corresponding to the two groups of SRIs are the same. In an embodiment, the sum of the numbers of transmission layers corresponding to the two groups of SRIs is the number of transmission layers.

In an embodiment, the DCI indicates two numbers of transmission layers for the PUSCH, and the two numbers of transmission layers are encoded jointly with the two groups of SRIs respectively (that is, one SRI field indicates one group of SRIs, and the number of SRS resources indicated by this SRI field is recorded as the number of transmission layers corresponding to this group SRIs); or, the two numbers of transmission layers are encoded separately, for example, one specific information field indicates the two numbers of transmission layers.

Some indication methods for SRI and number of transmission layers are as follows.

In an embodiment, two groups of SRIs are indicated by two information fields, and the two information fields both indicate the SRI and the number of transmission layers simultaneously, and then the rank corresponding to the DMRS port indication information is equal to the sum of the numbers of transmission layers indicated by the two information fields.

In an embodiment, two groups of SRIs are indicated by two information fields, and one of the information fields indicates the number of transmission layers corresponding to one group of SRIs, and then the rank corresponding to the DMRS port indication information is equal to N times the number of transmission layers indicated by this information field.

In an embodiment, two groups of SRIs are indicated by the same information field, and this information field indicates two numbers of transmission layers, and then the rank corresponding to the DMRS port indication information is equal to the sum of the two numbers of transmission layers indicated by this information field.

In an embodiment, two groups of SRIs are indicated by the same information field, and this information field indicates one number of transmission layers, which is the sum of the numbers of transmission layers of the two groups of SRIs, and then the rank corresponding to the DMRS port indication information is equal to the number of transmission layers indicated by this information field.

In an embodiment, there is one information field used to indicate the number of transmission layers in the DCI. This information field indicates the sum of the numbers of transmission layers of the two groups of SRIs, and then the rank corresponding to the DMRS port indication information is equal to the number of transmission layers indicated by this information field.

In an embodiment, there is one information field used to indicate the number of transmission layers in the DCI. This information field indicates the number of layers corresponding to each of the numbers of transmission layers of the two groups of SRIs, and then the rank corresponding to the DMRS port indication information is equal to the sum of the two numbers of layers indicated by this information field.

In an embodiment, two groups of SRIs are indicated by two information fields, and the two information fields indicate the SRI and the number of transmission layers simultaneously, and then the rank corresponding to the DMRS port indication information is equal to the sum of the numbers of SRS resources indicated by these two information fields.

In an embodiment, two groups of SRIs are indicated by two information fields, and the first information field indicates one group of SRIs, and another information field indicates another group of SRIs based on the number of SRS resources indicated by the first information field. The rank corresponding to the DMRS port indication information is equal to N times the number of SRS resources indicated by the first information field.

In an embodiment, two groups of SRIs are indicated by the same information field, and then the rank corresponding to the DMRS port indication information is equal to the sum of the numbers of the two groups of SRS resources indicated by this information field.

In an embodiment, there is one information field used to indicate the number of transmission layers in the DCI. This information field indicates the sum of the numbers of SRS resources of the two groups of SRIs, and then the rank corresponding to the DMRS port indication information is equal to the number of SRS resources indicated by this information field.

In an embodiment, there is one information field used to indicate the number of SRS resources in the DCI. This information field indicates the number of SRS resources corresponding to each of the two groups of SRIs, and then the rank corresponding to the DMRS port indication information is equal to the sum of the numbers of the two groups of SRS resources indicated by this information field.

In an embodiment, in case that the DCI indicates two groups of SRIs, each group of SRIs corresponds to one or more of a precoding/SRI field/TCI state/SRS resource set/antenna panel/codeword/TRP/beam/CORESETPoolIndex.

The number of DMRS ports for the PUSCH is equal to the number of transmission layers corresponding to the DMRS port indication information or the sum of the numbers of two groups of SRS resources. Each DMRS port for the PUSCH corresponds to each layer for the PUSCH one-to-one. Further, each DMRS port for the PUSCH corresponds to the SRS resources indicated by the two groups of SRIs one-to-one.

In an embodiment, one information field in the DCI indicates the DMRS port corresponding to PUSCH transmission (for example, an antenna port field). The rank corresponding to the DMRS port indication information is equal to the sum of the numbers of transmission layers corresponding to the two groups of SRIs indicated by the DCI.

The numbers of transmission layers corresponding to the two groups of SRIs are L1 and L2 respectively, and then the number of transmission layers corresponding to the DMRS port is L1+L2.

In an embodiment, the first L1 port indicated by the information field used to indicate the DMRS port corresponds to the first group of SRIs, and the (L1+1)-th port to (L1+L2)-th port correspond to the second group of SRIs.

In an embodiment, the first L1 ports indicated by the information field used to indicate the DMRS port correspond to TCI state/SRS resource set/antenna panel/codeword/TRP/beam/ CORESETPoolIndex corresponding to the first group of SRIs. The remaining DMRS ports correspond to TCI state/SRS resource set/antenna panel/codeword/TRP/-beam/ CORESETPoolIndex corresponding to another group of SRIs.

In an embodiment, DMRS ports corresponding to different SRI groups belong to different CDM groups.

Assuming that the number of transmission layers corresponding to the two groups of SRIs are L1 and L2 respectively, then the number of transmission layers corresponding to the DMRS ports is L1+L2, and the information field used to indicate the antenna port indicates L1+L2 DMRS ports, where the CDM group corresponding to the L1 DMRS ports is different from the CDM group corresponding to the other L2 DMRS ports. For example, the L1 DMRS ports correspond to one CDM group, and the other L2 DMRS ports correspond to another CDM group.

In an embodiment, the DMRS port corresponding to the group of SRIs is determined based on the CDM group corresponding to the DMRS port. For example, if the L1 DMRS ports indicated by the information field used to indicate DMRS ports are antenna ports in one CDM group, and the other L2 DMRS ports are antenna ports in another CDM group, then L1 DMRS ports in the same CDM group correspond to the group of SRIs with the number of SRS resources L1, and L2 DMRS ports in another CDM group correspond to the group of SRIs with the number of SRS resources L2.

In an embodiment, the association relationship between the DMRS port and the TCI state/SRS resource set/antenna panel/codeword/TRP/beam/CORESETPoolIndex is determined based on the CDM group corresponding to the DMRS port. For example, if L1 DMRS ports indicated by the information field used to indicate DMRS ports are antenna ports in one CDM group, and other L2 DMRS ports are antenna ports in another CDM group, then L1 DMRS ports in the same CDM group correspond to the TCI state/SRS resource set/antenna panel/ codeword/TRP/beam/CORESETPoolIndex corresponding to the group of SRIs with the number of SRS resources L1, and L2 DMRS ports in another CDM group correspond to the TCI state/SRS resource set/antenna panel/codeword/TRP/beam/ CORESETPoolIndex corresponding to the group of SRIs with the number of SRS resources L2.

In an embodiment, the CDM group has a predefined association relationship with the precoding matrix/precoding and/or number of layers field/SRI field/TCI state/SRS resource set/antenna panel/codeword/TRP/beam/CORESETPoolIndex; or, the association relationship is indicated by the network side. For example, the DMRS ports corresponding to the CDM group with a relatively small serial number correspond to the first group of SRIs/SRI field/TCI state/SRS resource set/antenna panel/codeword/TRP/beam/CORESETPoolIndex, and the CDM group with a relatively large serial number corresponds to the second group of SRIs/SRI field/TCI state/SRS resource set/antenna panel/codeword/TRP/beam/CORESETPoolIndex; or, the CDM group with a relatively large serial number corresponds to the first group of SRIs/SRI field/TCI state/SRS resource set/antenna panel/codeword/TRP/beam/CORESETPoolIndex, and the CDM group with a relatively small serial number corresponds to the second group of SRIs/SRI field/TCI state/SRS resource set/antenna panel/codeword/TRP/beam/ CORESETPoolIndex.

In an embodiment, the group of SRIs is a group of SRIs indicated by all SRI fields included in the DCI; or, the group of SRIs is a group of SRIs indicated by valid SRI field in the DCI. For example, the SRI field is all SRI fields included in the DCI. The SRI field is valid SRI field in the DCI, that is, unused SRI field is not included. In an embodiment, the value of N is equal to the number of valid SRI fields in the DCI.

In an embodiment, determining the DMRS ports based on the number of transmission layers corresponding to the DMRS port indication information includes: determining a DMRS allocation table corresponding to the DMRS port indication information based on the number of transmission layers corresponding to the DMRS port indication information, and further determining the content indicated by the DMRS port indication information, and then determining the DMRS ports.

In an embodiment, the PUSCH is configured as codebook-based PUSCH transmission, and is indicated as the following space division multiplexing (SDM) scheme: two TRPs/antenna panels respectively correspond to different layers/DMRS ports for the PUSCH, and two TRPs/UE antenna panels perform precoding and transmission separately corresponding to different layers/DMRS ports.

In the method for determining DMRS port provided by the embodiments of the present application, the terminal determines the DMRS ports based on the DMRS port indication information indicated by one first information field and the first indication information indicating N pieces of first information, where the DMRS port indication information and the first indication information are transmitted from the network device. As such, one information field is used to jointly indicate the DMRS ports for N TRPs or antenna panels to achieve PUSCH repetition, which improves the transmission rate of PUSCH, and also reduces the overhead for indicating the DMRS port.

FIG. 3 is a schematic structural diagram of a terminal according to an embodiment of the present application. As shown in FIG. 3, the terminal includes a memory 301, a transceiver 302, and a processor 303,

where the memory 301 is used for storing a computer program; and the transceiver 302 is used for receiving and transmitting data under control of the processor 303.

In an embodiment, the transceiver 302 is used for receiving and transmitting data under the control of the processor 303.

In FIG. 3, a bus architecture may include any number of interconnected buses and bridges, which are linked together through various circuits of one or more processors represented by the processor 303 and one or more memories represented by the memory 301. The bus architecture may also link together various other circuits, such as peripherals, voltage regulators, and power management circuits, etc., which are well known in the art, and therefore are not further described in the present application. The bus interface provides an interface. The transceiver 302 may include multiple elements, i.e., including a transmitter and a receiver, units for providing communication with various other devices over transmission media including wireless channels, wired channels, fiber optic cables, and the like. For different user equipments, user interface 304 may be an interface capable of externally or internally connecting the required equipment, and the connected equipment includes, but not limited to, a small keypad, a display, a speaker, a microphone, a joystick, and the like.

The processor 303 is responsible for managing the bus architecture and general processing, and the memory 301 may store data used by the processor 303 when performing operations.

In an embodiment, the processor 303 may be a central processing unit (CPU), an application specific integrated circuit (ASIC), a field-programmable gate array (FPGA), or a complex programmable logic device (CPLD), the processor may also use a multi-core architecture.

The processor is configured to perform any method provided by the embodiments of the present application performed by the terminal according to the obtained executable instructions by calling the computer program stored in the memory. The processor and memory may also be physically separated.

The processor 303 is used for reading the computer program in the memory 301 and performing the following operations:

receiving demodulation reference signal (DMRS) port indication information and first indication information transmitted from a network device, where the DMRS port indication information is indicated by one first information field, the first indication information is used to indicate N pieces of first information, and N is an integer greater than 1; and

determining DMRS ports based on the DMRS port indication information and the first indication information.

In an embodiment, determining the DMRS ports based on the DMRS port indication information and the first indication information includes:

determining a first number of layers corresponding to the DMRS port indication information based on the first indication information; and

determining the DMRS ports based on the first number of layers and the DMRS port indication information.

In an embodiment, determining the first number of layers corresponding to the DMRS port indication information based on the first indication information includes:

determining the first number of layers based on a sum of second numbers of layers corresponding to the N pieces of first information; or

determining the first number of layers based on a sum of numbers of sounding reference signal (SRS) resources corresponding to the N pieces of first information.

In an embodiment, in case that the DMRS ports are DMRS ports corresponding to codebook-based physical uplink shared channel (PUSCH), the first information is precoding and/or number of layers indication information, and the first number of layers is determined based on a number of transmission layers indicated by the precoding and/or number of layers indication information; and/or
in case that the DMRS ports are DMRS ports corresponding to non-codebook-based physical uplink shared channel (PUSCH), the first information is sounding reference signal (SRS) resource indicator (SRI) information, and the first number of layers is determined based on a number of SRS resources indicated by the SRI information.

In an embodiment, the first number of layers is equal to the sum of the second numbers of layers corresponding to the N pieces of first information; or, the first number of layers is equal to the sum of the numbers of SRS resources corresponding to the N pieces of first information.

In an embodiment, the first number of layers is equal to N times a second number of layers corresponding to one piece of the first information indicated by the first indication information, and/or N times a number of sounding reference signal (SRS) resources corresponding to one piece of the first information indicated by the first indication information.

In an embodiment, the sum of the second numbers of layers corresponding to the N pieces of first information and/or the sum of the numbers of SRS resources corresponding to the N pieces of first information is indicated by the network device.

In an embodiment, determining the first number of layers based on the sum of the second numbers of layers corresponding to the N pieces of first information includes:
in case that a second number of layers corresponding to i-th first information among the N pieces of first information is $L_i$, determining the first number of layers as $\sum_{i=1}^{N} L_i$.

In an embodiment, determining the first number of layers based on the sum of the numbers of SRS resources corresponding to the N pieces of first information includes:
in case that a number of SRS resources corresponding to i-th first information among the N pieces of first information is $Q_i$, determining the first number of layers as $\sum_{i=1}^{N} Q_i$.

In an embodiment, in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, where in case that i=1, $L_{i-1}=0$; and/or
in case that the first information is sounding reference signal (SRS) resource indicator (SRI) information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, where in case that i=1, $Q_{i-1}=0$.

In an embodiment, the N pieces of first information are encoded jointly and indicated by one second information field; or
the N pieces of first information are encoded separately and indicated by N third information fields.

In an embodiment, in case that the N pieces of first information are encoded separately and indicated by the N third information fields,

if a second number of layers corresponding to i-th third information field among the N third information fields is $L_i$, the i-

th third information field among the N third information fields corresponds to $(L_{i-1}+1)$-th DMRS port to $(L_{i-1}+L_i)$-th DMRS port indicated by the one first information field, where in case that i=1, $L_{i-1}=0$; or

if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, where in case that i=1, $Q_{i-1}=0$.

In an embodiment, DMRS ports corresponding to any two pieces of the first information among the N pieces of first information are DMRS ports in different code division multiplexing (CDM) groups.

In an embodiment, in case that one first indicator field corresponds to N CDM groups and second numbers of layers and/or numbers of sounding reference signal (SRS) resources corresponding to the N pieces of first information are different, i-th first information among the N pieces of first information corresponds to j-th CDM group among the N CDM groups, where a number of DMRS ports included in the j-th CDM group is equal to the second number of layers or the number of SRS resources corresponding to the i-th first information.

In an embodiment, determining the DMRS ports based on the DMRS port indication information and the first indication information includes:

determining code division multiplexing (CDM) groups corresponding to the N pieces of first information based on the DMRS port indication information, where the CDM groups and second information have an association relationship; and

determining the DMRS ports corresponding to the second information based on the association relationship,

where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex);

a sounding reference signal (SRS) resource set; or

a sounding reference signal (SRS) resource indicator field.

In an embodiment, the processor 303 is used for reading the computer program in the memory 301 and further performing the following operations:
determining an association relationship between the DMRS ports and second information based on code division multiplexing (CDM) groups corresponding to the DMRS ports, where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex); or

a sounding reference signal (SRS) resource set.

In an embodiment, determining the DMRS ports based on the first number of layers and the DMRS port indication information includes:

determining a DMRS indication table based on the first number of layers; and

determining the DMRS ports based on the DMRS indication table and the DMRS port indication information.

In an embodiment, all DMRS ports indicated by the one first information field correspond to same DMRS port configuration information.

In an embodiment, the DMRS port configuration information is used to configure one or more of the following:

a DMRS type; or

a maximum number of front-loaded DMRS symbols.

In an embodiment, the first information is used to indicate one or more of the following:

a codeword;

a beam;

an antenna panel;

a transmission/reception point (TRP);

a precoding matrix;

a transmission configuration indicator (TCI) state;

a resource set; or

a control resource set pool index (CORESETPoolIndex).

It should be noted here that the above-mentioned terminal provided by the embodiments of the present application may implement all the method steps implemented by the above-mentioned method embodiment with the terminal as the execution subject, and may achieve the same technical effect. The same parts and beneficial effects in the embodiments as those in the method embodiments are not described in detail.

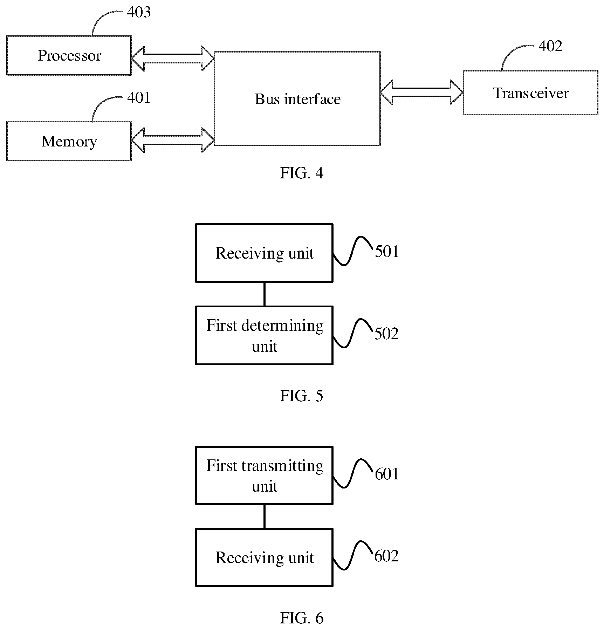

FIG. 4 is a schematic structural diagram of a network device according to an embodiment of the present application. As shown in FIG. 4, the network device includes a memory 401, a transceiver 402, and a processor 403, where the memory 401 is used for storing a computer program; the transceiver 402 is used for receiving and transmitting data under control of the processor 403.

In an embodiment, the transceiver 402 is used for receiving and transmitting data under the control of the processor 403.

In FIG. 4, a bus architecture may include any number of interconnected buses and bridges, which are linked together through various circuits of one or more processors represented by the processor 403 and one or more memories represented by the memory 401. The bus architecture may also link together various other circuits, such as peripherals, voltage regulators, and power management circuits, etc., which are well known in the art, and therefore are not further described in the present application. The bus interface provides an interface. The transceiver 402 may include multiple elements, i.e., including a transmitter and a receiver, units for providing communication with various other devices over transmission media including wireless channels, wired channels, fiber optic cables, and the like. The processor 403 is responsible for managing the bus architecture and general processing, and the memory 401 may store data used by the processor 403 when performing operations.

The processor 403 may be may be a central processing unit (CPU), an application specific integrated circuit (ASIC), a field-programmable gate array (FPGA), or a complex programmable logic device (CPLD), the processor may also use a multi-core architecture.

The processor 403 is used for reading the computer program in the memory 401 and performing the following operations:

transmitting demodulation reference signal (DMRS) port indication information and first indication information to a terminal, where the DMRS port indication information is indicated by one first information field, the first indication information is used to indicate N pieces of first information, and N is an integer greater than 1; and

receiving DMRSs transmitted from the terminal, where DMRS ports corresponding to the DMRSs are indicated by the DMRS port indication information and the first indication information.

In an embodiment, the DMRS ports correspond to a first number of layers and the DMRS port indication information, the first number of layers is a number of layers corresponding to the DMRS port indication information, and the first number of layers is indicated by the first indication information.

In an embodiment, the first number of layers corresponds to a sum of second numbers of layers corresponding to the N pieces of first information; or, the first number of layers corresponds to a sum of numbers of sounding reference signal (SRS) resources corresponding to the N pieces of first information.

In an embodiment, in case that the DMRS ports are DMRS ports corresponding to codebook-based physical uplink shared channel (PUSCH), the first information is precoding and/or number of layers indication information, and the first number of layers corresponds to a number of transmission layers indicated by the precoding and/or number of layers indication information; and/or

in case that the DMRS ports are DMRS ports corresponding to non-codebook-based physical uplink shared channel (PUSCH), the first information is sounding reference signal (SRS) resource indicator (SRI) information, and the first number of layers corresponds to a number of SRS resources indicated by the SRI information.

In an embodiment, the first number of layers is equal to the sum of the second numbers of layers corresponding to the N pieces of first information; or, the first number of layers is equal to the sum of the numbers of SRS resources corresponding to the N pieces of first information.

In an embodiment, the first number of layers is equal to N times a second number of layers corresponding to one piece of first information indicated by the first indication information, and/or N times a number of sounding reference signal (SRS) resources corresponding to one piece of first information indicated by the first indication information.

In an embodiment, the processor 403 is used for reading the computer program in the memory 401 and further performing the following operations:

indicating a sum of second numbers of layers corresponding to the N pieces of first information; and/or

indicating a sum of numbers of SRS resources corresponding to the N pieces of first information.

In an embodiment, in case that a second number of layers corresponding to i-th first information among the N pieces of first information is $L_i$, the first number of layers is $\sum_{i=1}^{N} L_i$.

In an embodiment, in case that a number of SRS resources corresponding to i-th first information among the N pieces of first information is $Q_i$, the first number of layers is $\sum_{i=1}^{N} Q_i$.

In an embodiment, in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, where in case that i=1, $L_{i-1}=0$; and/or

in case that the first information is SRI information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, where in case that i=1, $Q_{i-1}=0$.

In an embodiment, the processor 403 is used for reading the computer program in the memory 401 and further performing the following operations:

performing joint encoding on the N pieces of first information, and indicating the N pieces of first information by one second information field; or

performing independent encoding on the N pieces of first information, and indicating the N pieces of first information by N third information fields.

In an embodiment, in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, where in case that i=1, $L_{i-1}=0$; or

if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, where in case that i=1, $Q_{i-1}=0$.

In an embodiment, DMRS ports corresponding to any two pieces of the first information among the N pieces of first information are DMRS ports in different code division multiplexing (CDM) groups.

In an embodiment, in case that one first indicator field corresponds to N CDM groups and second numbers of layers and/or numbers of SRS resources corresponding to the N pieces of first information are different, i-th first information among the N pieces of first information corresponds to j-th CDM group among the N CDM groups, where a number of DMRS ports included in the j-th CDM group is equal to a second number of layers or a number of SRS resources corresponding to the i-th first information.

In an embodiment, the processor 403 is used for reading the computer program in the memory 401 and further performing the following operations:
transmitting an association relationship between code division multiplexing (CDM) groups and second information to the terminal, where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex);

a sounding reference signal (SRS) resource set; or

a sounding reference signal (SRS) resource indicator field.

In an embodiment, the first number of layers is used to determine a DMRS indication table, and the DMRS indication table is used to determine the DMRS ports.
In an embodiment, all DMRS ports indicated by the one first information field correspond to same DMRS port configuration information.
In an embodiment, the DMRS port configuration information is used to configure one or more of the following:

a DMRS type; or

a maximum number of front-loaded DMRS symbols.

In an embodiment, the first information is used to indicate one or more of the following:

a codeword;

a beam;

an antenna panel;

a transmission/reception point (TRP);

a precoding matrix;

a transmission configuration indicator (TCI) state;

a resource set; or

a control resource set pool index (CORESETPoolIndex).

It should be noted here that the above-mentioned network device provided by the embodiment of the present application may implement all the method steps implemented by the above-mentioned method embodiment with the network device as the execution subject, and may achieve the same technical effect. The same parts and beneficial effects in the embodiments as those in the method embodiments are not described in detail.

FIG. 5 is a first schematic structural diagram of an apparatus for determining demodulation reference signal (DMRS) port according to an embodiment of the present application. As shown in FIG. 5, the apparatus includes:

a receiving unit 501, used for receiving DMRS port indication information and first indication information transmitted from a network device, where the DMRS port indication information is indicated by one first information field, the first indication information is used to indicate N pieces of first information, and N is an integer greater than 1; and

a first determining unit 502, used for determining DMRS ports based on the DMRS port indication information and the first indication information.

In an embodiment, the first determining unit 502 includes:

a first determining module, used for determining a first number of layers corresponding to the DMRS port indication information based on the first indication information; and

a second determining module, used for determining the DMRS ports based on the first number of layers and the DMRS port indication information.

In an embodiment, the first determining module includes:

a first determining sub-module, used for determining the first number of layers based on a sum of second numbers of layers corresponding to the N pieces of first information; or

a second determining sub-module, used for determining the first number of layers based on a sum of numbers of sounding reference signal (SRS) resources corresponding to the N pieces of first information.

In an embodiment, in case that the DMRS ports are DMRS ports corresponding to codebook-based physical uplink shared channel (PUSCH), the first information is precoding and/or number of layers indication information, and the first number of layers is determined based on a number of transmission layers indicated by the precoding and/or number of layers indication information; and/or

in case that the DMRS ports are DMRS ports corresponding to non-codebook-based physical uplink shared channel (PUSCH), the first information is sounding reference signal (SRS) resource indicator (SRI) information, and the first number of layers is determined based on a number of SRS resources indicated by the SRI information.

In an embodiment, the first number of layers is equal to the sum of the second numbers of layers corresponding to the N pieces of first information; or, the first number of layers is equal to the sum of the numbers of SRS resources corresponding to the N pieces of first information.

In an embodiment, the first number of layers is equal to N times a second number of layers corresponding to one piece of the first information indicated by the first indication information, and/or N times a number of sounding reference signal (SRS) resources corresponding to one piece of the first information indicated by the first indication information.

In an embodiment, the sum of the second numbers of layers corresponding to the N pieces of first information and/or the sum of the numbers of SRS resources corresponding to the N pieces of first information is indicated by the network device.

In an embodiment, the first determining sub-module is used for:

in case that a second number of layers corresponding to i-th first information among the N pieces of first information is $L_i$,

determining the first number of layers as $\sum_{i=1}^{N} L_i$.

In an embodiment, the second determining sub-module is used for:

in case that a number of SRS resources corresponding to i-th first information among the N pieces of first information is $Q_i$,

determining the first number of layers as $\sum_{i=1}^{N} Q_i$.

In an embodiment, in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, where in case that i=1, $L_{i-1}$=0; and/or

in case that the first information is sounding reference signal (SRS) resource indicator (SRI) information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, where in case that i=1, $Q_{i-1}$=0.

In an embodiment, the N pieces of first information are encoded jointly and indicated by one second information field; or

the N pieces of first information are encoded separately and indicated by N third information fields.

In an embodiment, in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, where in case that i=1, $L_{i-1}$=0; or

if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, where in case that i=1, $Q_{i-1}$=0.

In an embodiment, DMRS ports corresponding to any two pieces of the first information among the N pieces of first information are DMRS ports in different code division multiplexing (CDM) groups.

In an embodiment, in case that one first indicator field corresponds to N CDM groups and second numbers of layers and/or numbers of sounding reference signal (SRS) resources corresponding to the N pieces of first information are different, i-th first information among the N pieces of first information corresponds to j-th CDM group among the N CDM groups, where a number of DMRS ports included in the j-th CDM group is equal to the second number of layers or the number of SRS resources corresponding to the i-th first information.

In an embodiment, the first determining unit 502 includes:

a third determining module, used for determining code division multiplexing (CDM) groups corresponding to the N pieces of first information based on the DMRS port indication information, where the CDM groups and second information have an association relationship; and

a fourth determining module, used for determining the DMRS ports corresponding to the second information based on the association relationship,

where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex);

a sounding reference signal (SRS) resource set; or

a sounding reference signal (SRS) resource indicator field.

In an embodiment, the apparatus further includes:
a second determining unit, used for determining an association relationship between the DMRS ports and second information based on code division multiplexing (CDM) groups corresponding to the DMRS ports, where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex); or

a sounding reference signal (SRS) resource set.

In an embodiment, the second determining module is used for:

determining a DMRS indication table based on the first number of layers; and

determining the DMRS ports based on the DMRS indication table and the DMRS port indication information.

In an embodiment, all DMRS ports indicated by the one first information field correspond to same DMRS port configuration information.
In an embodiment, the DMRS port configuration information is used to configure one or more of the following:

a DMRS type; or

a maximum number of front-loaded DMRS symbols.

In an embodiment, the first information is used to indicate one or more of the following:

a codeword;

a beam;

an antenna panel;

a transmission/reception point (TRP);

a precoding matrix;

a transmission configuration indicator (TCI) state;

a resource set; or

a control resource set pool index (CORESETPoolIndex).

FIG. 6 is a second schematic structural diagram of an apparatus for determining demodulation reference signal (DMRS) port according to an embodiment of the present application. As shown in FIG. 6, the apparatus includes:

a first transmitting unit 601, used for transmitting DMRS port indication information and first indication information to a terminal, where the DMRS port indication information is indicated by one first information field, the first indication information is used to indicate N pieces of first information, and N is an integer greater than 1; and

a receiving unit 602, used for receiving DMRSs transmitted from the terminal, where DMRS ports corresponding to the DMRSs are indicated by the DMRS port indication information and the first indication information.

In an embodiment, the DMRS ports correspond to a first number of layers and the DMRS port indication information, the first number of layers is a number of layers corresponding to the DMRS port indication information, and the first number of layers is indicated by the first indication information.

In an embodiment, the first number of layers corresponds to a sum of second numbers of layers corresponding to the N pieces of first information; or, the first number of layers corresponds to a sum of numbers of sounding reference signal (SRS) resources corresponding to the N pieces of first information.

In an embodiment, in case that the DMRS ports are DMRS ports corresponding to codebook-based physical uplink shared channel (PUSCH), the first information is precoding and/or number of layers indication information, and the first number of layers corresponds to a number of transmission layers indicated by the precoding and/or number of layers indication information; and/or

in case that the DMRS ports are DMRS ports corresponding to non-codebook-based physical uplink shared channel (PUSCH), the first information is sounding reference signal (SRS) resource indicator (SRI) information, and the first number of layers corresponds to a number of SRS resources indicated by the SRI information.

In an embodiment, the first number of layers is equal to the sum of the second numbers of layers corresponding to the N pieces of first information; or, the first number of layers is equal to the sum of the numbers of SRS resources corresponding to the N pieces of first information.

In an embodiment, the first number of layers is equal to N times a second number of layers corresponding to one piece of first information indicated by the first indication information, and/or N times a number of sounding reference signal (SRS) resources corresponding to one piece of first information indicated by the first indication information.

In an embodiment, the apparatus further includes:

an indicating unit, used for indicating a sum of second numbers of layers corresponding to the N pieces of first information; and/or indicating a sum of numbers of SRS resources corresponding to the N pieces of first information.

In an embodiment, in case that a second number of layers corresponding to i-th first information among the N pieces of first information is $L_i$, the first number of layers is $\sum_{i=1}^{N} L_i$ .

In an embodiment, in case that a number of SRS resources corresponding to i-th first information among the N pieces of first information is $Q_i$, the first number of layers is $\sum_{i=1}^{N} Q_i$ .

In an embodiment, in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, where in case that i=1, $L_{i-1}=0$; and/or

in case that the first information is SRI information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, where in case that i=1, $Q_{i-1}=0$.

In an embodiment, the apparatus further includes: an encoding unit, used for:

performing joint encoding on the N pieces of first information, and indicating the N pieces of first information by one second information field; or

performing independent encoding on the N pieces of first information, and indicating the N pieces of first information by N third information fields.

In an embodiment, in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, where in case that i=1, $L_{i-1}=0$; or

if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, where in case that i=1, $Q_{i-1}=0$.

In an embodiment, DMRS ports corresponding to any two pieces of the first information among the N pieces of first information are DMRS ports in different code division multiplexing (CDM) groups.

In an embodiment, in case that one first indicator field corresponds to N CDM groups and second numbers of layers and/or numbers of SRS resources corresponding to the N pieces of first information are different, i-th first information among the N pieces of first information corresponds to j-th CDM group among the N CDM groups, where a number of DMRS ports included in the j-th CDM group is equal to a second number of layers or a number of SRS resources corresponding to the i-th first information.

In an embodiment, the apparatus further includes:
a second transmitting unit, used for transmitting an association relationship between code division multiplexing (CDM) groups and second information to the terminal, where the second information includes one or more of the following:

a codeword;

a beam;

an antenna panel;

a transmission/reception point (TRP);

a precoding matrix;

a precoding and/or number of layers field;

a transmission configuration indicator (TCI) state;

a control resource set pool index (CORESETPoolIndex);

a sounding reference signal (SRS) resource set; or

a sounding reference signal (SRS) resource indicator field.

In an embodiment, the first number of layers is used to determine a DMRS indication table, and the DMRS indication table is used to determine the DMRS ports.

In an embodiment, all DMRS ports indicated by the one first information field correspond to same DMRS port configuration information.

In an embodiment, the DMRS port configuration information is used to configure one or more of the following:

a DMRS type; or

a maximum number of front-loaded DMRS symbols.

In an embodiment, the first information is used to indicate one or more of the following:

a codeword;

a beam;

an antenna panel;

a transmission/reception point (TRP);

a precoding matrix;

a transmission configuration indicator (TCI) state;

a resource set; or

a control resource set pool index (CORESETPoolIndex).

The methods and apparatuses provided in the embodiments of the present application are based on the same conception. Since the methods and apparatuses solve problems in similar principles, the implementation of the apparatuses and methods may be referred to each other, and repeated details are not repeated.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

It should be noted here that the above-mentioned apparatuses provided by the embodiments of the present application may implement all the method steps implemented by the above-mentioned method embodiment, and may achieve the same effects. The same parts and beneficial effects in the embodiments as those in the method embodiments are not described in detail.

On the other hand, an embodiment of the present application further provides a processor-readable storage medium. The processor-readable storage medium stores a computer program. The computer program is used to cause a processor to perform the method for determining demodulation reference signal (DMRS) port, where the method includes:

receiving DMRS port indication information and first indication information transmitted from a network device, where the DMRS port indication information is indicated by one first information field, the first indication information is used to indicate N pieces of first information, and N is an integer greater than 1; and determining DMRS ports based on the DMRS port indication information and the first indication information;
or,

transmitting DMRS port indication information and first indication information to a terminal, where the DMRS port indication information is indicated by one first information field, the first indication information is used to indicate N pieces of first information, and N is an integer greater than 1; and receiving DMRSs transmitted from the terminal, where DMRS ports corresponding to the DMRSs are indicated by the DMRS port indication information and the first indication information.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for determining demodulation reference signal, DMRS, port, comprising:

   receiving DMRS port indication information and first indication information transmitted from a network device, wherein the DMRS port indication information is indicated by one first information field, the first indication information is used to indicate N pieces of first information, and N is an integer greater than 1; and
   determining DMRS ports based on the DMRS port indication information and the first indication information.

2. The method of claim 1, wherein determining the DMRS ports based on the DMRS port indication information and the first indication information comprises:

   determining a first number of layers corresponding to the DMRS port indication information based on the first indication information; and
   determining the DMRS ports based on the first number of layers and the DMRS port indication information.

3. The method of claim 2, wherein determining the first number of layers corresponding to the DMRS port indication information based on the first indication information comprises:

   determining the first number of layers based on a sum of second numbers of layers corresponding to the N pieces of first information; or
   determining the first number of layers based on a sum of numbers of sounding reference signal, SRS, resources corresponding to the N pieces of first information.

4. The method of any of claims 2 to 3, wherein in case that the DMRS ports are DMRS ports corresponding to codebook-based physical uplink shared channel, PUSCH, the first information is precoding and/or number of layers indication information, and the first number of layers is determined based on a number of transmission layers indicated by the precoding and/or number of layers indication information; and/or

in case that the DMRS ports are DMRS ports corresponding to non-codebook-based physical uplink shared channel, PUSCH, the first information is sounding reference signal, SRS, resource indicator, SRI, information, and the first number of layers is determined based on a number of SRS resources indicated by the SRI information.

5. The method of claim 3, wherein the first number of layers is equal to the sum of the second numbers of layers corresponding to the N pieces of first information; or, the first number of layers is equal to the sum of the numbers of SRS resources corresponding to the N pieces of first information.

6. The method of claim 2 or 3, wherein the first number of layers is equal to N times a second number of layers corresponding to one piece of the first information indicated by the first indication information, and/or N times a number of sounding reference signal, SRS, resources corresponding to one piece of the first information indicated by the first indication information.

7. The method of claim 3 or 5, wherein the sum of the second numbers of layers corresponding to the N pieces of first information and/or the sum of the numbers of SRS resources corresponding to the N pieces of first information is indicated by the network device.

8. The method of claim 3, wherein determining the first number of layers based on the sum of the second numbers of layers corresponding to the N pieces of first information comprises:
   in case that a second number of layers corresponding to i-th first information among the N pieces of first information is $L_i$, determining the first number of layers as $\sum_{i=1}^{N} L_i$.

9. The method of claim 3, wherein determining the first number of layers based on the sum of the numbers of SRS resources corresponding to the N pieces of first information comprises: in case that a number of SRS resources corresponding to i-th first information among the N pieces of first information is $Q_i$, determining the first number of layers as $\sum_{i=1}^{N} Q_i$.

10. The method of any of claims 4 to 9, wherein

    in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, wherein in case that i=1, $L_{i-1}$=0; and/or
    in case that the first information is sounding reference signal, SRS, resource indicator, SRI, information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, wherein in case that i=1, $Q_{i-1}$=0.

11. The method of any of claims 1 to 10, wherein

    the N pieces of first information are encoded jointly and indicated by one second information field; or
    the N pieces of first information are encoded separately and indicated by N third information fields.

12. The method of claim 11, wherein in case that the N pieces of first information are encoded separately and indicated by the N third information fields,

    if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, wherein in case that i=1, $L_{i-1}$=0; or
    if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, wherein in case that i=1, $Q_{i-1}$=0.

13. The method of any of claims 1 to 12, wherein DMRS ports corresponding to any two pieces of the first information among the N pieces of first information are DMRS ports in different code division multiplexing, CDM, groups.

14. The method of claim 13, wherein in case that one first indicator field corresponds to N CDM groups and second numbers of layers and/or numbers of sounding reference signal, SRS, resources corresponding to the N pieces of first information are different, i-th first information among the N pieces of first information corresponds to j-th CDM group among the N CDM groups, wherein a number of DMRS ports comprised in the j-th CDM group is equal to the second number of layers or the number of SRS resources corresponding to the i-th first information.

15. The method of any of claims 1 to 14, wherein determining the DMRS ports based on the DMRS port indication information and the first indication information comprises:

    determining code division multiplexing, CDM, groups corresponding to the N pieces of first information based on the DMRS port indication information, wherein the CDM groups and second information have an association relationship; and
    determining the DMRS ports corresponding to the second information based on the association relationship, wherein the second information comprises one or more of the following:

        a codeword;
        a beam;
        an antenna panel;
        a transmission/reception point, TRP;
        a precoding matrix;
        a precoding and/or number of layers field;
        a transmission configuration indicator, TCI, state;
        a control resource set pool index, CORESETPoolIndex;
        a sounding reference signal, SRS, resource set; or
        a sounding reference signal, SRS, resource indicator field.

16. The method of any of claims 1 to 15, further comprising:
    determining an association relationship between the DMRS ports and second information based on code division multiplexing, CDM groups corresponding to the DMRS ports, wherein the second information comprises one or more of the following:

        a codeword;
        a beam;
        an antenna panel;
        a transmission/reception point, TRP;
        a precoding matrix;
        a precoding and/or number of layers field;
        a transmission configuration indicator, TCI, state;
        a control resource set pool index, CORESETPoolIndex; or
        a sounding reference signal, SRS, resource set.

17. The method of claim 2, wherein determining the DMRS ports based on the first number of layers and the DMRS port indication information comprises:

        determining a DMRS indication table based on the first number of layers; and
        determining the DMRS ports based on the DMRS indication table and the DMRS port indication information.

18. The method of any of claims 1 to 17, wherein all DMRS ports indicated by the one first information field correspond to same DMRS port configuration information.

19. The method of claim 18, wherein the DMRS port configuration information is used to configure one or more of the following:

        a DMRS type; or
        a maximum number of front-loaded DMRS symbols.

20. The method of any of claims 1 to 19, wherein the first information is used to indicate one or more of the following:

a codeword;
a beam;
an antenna panel;
a transmission/reception point, TRP;
a precoding matrix;
a transmission configuration indicator, TCI, state;
a resource set; or
a control resource set pool index, CORESETPoolIndex.

21. A method for determining demodulation reference signal, DMRS, port, comprising:

transmitting DMRS port indication information and first indication information to a terminal, wherein the DMRS port indication information is indicated by one first information field, the first indication information is used to indicate N pieces of first information, and N is an integer greater than 1; and
receiving DMRSs transmitted from the terminal, wherein DMRS ports corresponding to the DMRSs are indicated by the DMRS port indication information and the first indication information.

22. The method of claim 21, wherein the DMRS ports correspond to a first number of layers and the DMRS port indication information, the first number of layers is a number of layers corresponding to the DMRS port indication information, and the first number of layers is indicated by the first indication information.

23. The method of claim 22, wherein the first number of layers corresponds to a sum of second numbers of layers corresponding to the N pieces of first information; or, the first number of layers corresponds to a sum of numbers of sounding reference signal, SRS, resources corresponding to the N pieces of first information.

24. The method of any of claims 22 to 23, wherein

in case that the DMRS ports are DMRS ports corresponding to codebook-based physical uplink shared channel, PUSCH, the first information is precoding and/or number of layers indication information, and the first number of layers corresponds to a number of transmission layers indicated by the precoding and/or number of layers indication information; and/or
in case that the DMRS ports are DMRS ports corresponding to non-codebook-based physical uplink shared channel, PUSCH, the first information is sounding reference signal, SRS, resource indicator, SRI, information, and the first number of layers corresponds to a number of SRS resources indicated by the SRI information.

25. The method of claim 23, wherein the first number of layers is equal to the sum of the second numbers of layers corresponding to the N pieces of first information; or, the first number of layers is equal to the sum of the numbers of SRS resources corresponding to the N pieces of first information.

26. The method of claim 22 or 23, wherein the first number of layers is equal to N times a second number of layers corresponding to one piece of first information indicated by the first indication information, and/or N times a number of sounding reference signal, SRS, resources corresponding to one piece of first information indicated by the first indication information.

27. The method of claim 23 or 25, further comprising:

indicating a sum of second numbers of layers corresponding to the N pieces of first information; and/or
indicating a sum of numbers of SRS resources corresponding to the N pieces of first information.

28. The method of claim 23, wherein in case that a second number of layers corresponding to i-th first information among the N pieces of first information is $L_i$, the first number of layers is $\sum_{i=1}^{N} L_i$.

29. The method of claim 23, wherein in case that a number of SRS resources corresponding to i-th first information among the N pieces of first information is $Q_i$, the first number of layers is $\sum_{i=1}^{N} Q_i$.

30. The method of any of claims 24 to 29, wherein

in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, wherein in case that i=1, $L_{i-1}=0$; and/or
in case that the first information is SRI information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, wherein in case that i=1, $Q_{i-1}=0$.

31. The method of any of claims 21 to 30, further comprising:

performing joint encoding on the N pieces of first information, and indicating the N pieces of first information by one second information field; or
performing independent encoding on the N pieces of first information, and indicating the N pieces of first information by N third information fields.

32. The method of claim 31, wherein in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, wherein in case that i=1, $L_{i-1}=0$; or
if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, wherein in case that i=1, $Q_{i-1}=0$.

33. The method of any of claims 21 to 32, wherein DMRS ports corresponding to any two pieces of the first information among the N pieces of first information are DMRS ports in different code division multiplexing, CDM, groups.

34. The method of claim 33, wherein in case that one first indicator field corresponds to N CDM groups and second numbers of layers and/or numbers of SRS resources corresponding to the N pieces of first information are different, i-th first information among the N pieces of first information corresponds to j-th CDM group among the N CDM groups, wherein a number of DMRS ports comprised in the j-th CDM group is equal to a second number of layers or a number of SRS resources corresponding to the i-th first information.

35. The method of any of claims 21 to 34, further comprising:
transmitting an association relationship between code division multiplexing, CDM, groups and second information to the terminal, wherein the second information comprises one or more of the following:

a codeword;
a beam;
an antenna panel;
a transmission/reception point, TRP;
a precoding matrix;
a precoding and/or number of layers field;
a transmission configuration indicator, TCI, state;
a control resource set pool index, CORESETPoolIndex;
a sounding reference signal, SRS, resource set; or
a sounding reference signal, SRS, resource indicator field.

36. The method of claim 22, wherein the first number of layers is used to determine a DMRS indication table, and the DMRS indication table is used to determine the DMRS ports.

37. The method of any of claims 21 to 36, wherein all DMRS ports indicated by the one first information field correspond to same DMRS port configuration information.

38. The method of claim 37, wherein the DMRS port configuration information is used to configure one or more of the following:

a DMRS type; or
a maximum number of front-loaded DMRS symbols.

39. The method of any of claims 21 to 38, wherein the first information is used to indicate one or more of the following:

a codeword;
a beam;
an antenna panel;
a transmission/reception point, TRP;
a precoding matrix;
a transmission configuration indicator, TCI, state;
a resource set; or
a control resource set pool index, CORESETPoolIndex.

40. A terminal, comprising a memory, a transceiver, and a processor,
wherein the memory is used for storing a computer program; the transceiver is used for receiving and transmitting data under control of the processor; and the processor is used for reading the computer program in the memory and performing the following operations:

receiving demodulation reference signal, DMRS, port indication information and first indication information transmitted from a network device, wherein the DMRS port indication information is indicated by one first information field, the first indication information is used to indicate N pieces of first information, and N is an integer greater than 1; and
determining DMRS ports based on the DMRS port indication information and the first indication information.

41. The terminal of claim 40, wherein determining the DMRS ports based on the DMRS port indication information and the first indication information comprises:

determining a first number of layers corresponding to the DMRS port indication information based on the first indication information; and
determining the DMRS ports based on the first number of layers and the DMRS port indication information.

42. The terminal of claim 41, wherein determining the first number of layers corresponding to the DMRS port indication information based on the first indication information comprises:

determining the first number of layers based on a sum of second numbers of layers corresponding to the N pieces of first information; or
determining the first number of layers based on a sum of numbers of sounding reference signal, SRS, resources corresponding to the N pieces of first information.

43. The terminal of any of claims 41 to 42, wherein in case that the DMRS ports are DMRS ports corresponding to codebook-based physical uplink shared channel, PUSCH, the first information is precoding and/or number of layers indication information, and the first number of layers is determined based on a number of transmission layers indicated by the precoding and/or number of layers indication information; and/or
in case that the DMRS ports are DMRS ports corresponding to non-codebook-based physical uplink shared channel, PUSCH, the first information is sounding reference signal, SRS, resource indicator, SRI, information, and the first number of layers is determined based on a number of SRS resources indicated by the SRI information.

44. The terminal of claim 42, wherein the first number of layers is equal to the sum of the second numbers of layers corresponding to the N pieces of first information; or, the first number of layers is equal to the sum of the numbers of SRS resources corresponding to the N pieces of first information.

45. The terminal of claim 41 or 42, wherein the first number of layers is equal to N times a second number of layers corresponding to one piece of the first information indicated by the first indication information, and/or N times a number of sounding reference signal, SRS, resources corresponding to one piece of the first information indicated by the first

49

indication information.

46. The terminal of claim 42 or 44, wherein the sum of the second numbers of layers corresponding to the N pieces of first information and/or the sum of the numbers of SRS resources corresponding to the N pieces of first information is indicated by the network device.

47. The terminal of claim 42, wherein determining the first number of layers based on the sum of the second numbers of layers corresponding to the N pieces of first information comprises:
in case that a second number of layers corresponding to i-th first information among the N pieces of first information is L$_i$, determining the first number of layers as $\sum_{i=1}^{N} L_i$.

48. The terminal of claim 42, wherein determining the first number of layers based on the sum of the numbers of SRS resources corresponding to the N pieces of first information comprises:
in case that a number of SRS resources corresponding to i-th first information among the N pieces of first information is Q$_i$, determining the first number of layers as $\sum_{i=1}^{N} Q_i$.

49. The terminal of any of claims 43 to 48, wherein

in case that the first information is precoding and/or number of layers indication information, if a second number of layers corresponding to i-th first information among the N pieces of first information is L$_i$, a precoding matrix and/or layer indicated by the i-th first information corresponds to (L$_{i-1}$+1)-th DMRS port to (L$_{i-1}$+L$_i$)-th DMRS port indicated by the one first information field, wherein in case that i=1, L$_{i-1}$=0; and/or
in case that the first information is sounding reference signal, SRS, resource indicator, SRI, information, if a number of SRS resources corresponding to i-th first information among the N pieces of first information is Q$_i$, SRS resources indicated by the i-th first information correspond to (Q$_{i-1}$+1)-th DMRS port to (Q$_{i-1}$+Q$_i$)-th DMRS port indicated by the one first information field, wherein in case that i=1, Q$_{i-1}$=0.

50. The terminal of any of claims 40 to 49, wherein

the N pieces of first information are encoded jointly and indicated by one second information field; or
the N pieces of first information are encoded separately and indicated by N third information fields.

51. The terminal of claim 50, wherein in case that the N pieces of first information are encoded separately and indicated by the N third information fields,

if a second number of layers corresponding to i-th third information field among the N third information fields is L$_i$, the i-th third information field among the N third information fields corresponds to (L$_{i-1}$+1)-th DMRS port to (L$_{i-1}$+L$_i$)-th DMRS port indicated by the one first information field, wherein in case that i=1, L$_{i-1}$=0; or
if a number of SRS resources corresponding to i-th third information field among the N third information fields is Q$_i$, the i-th third information field among the N third information fields corresponds to (Q$_{i-1}$+1)-th DMRS port to (Q$_{i-1}$+Q$_i$)-th DMRS port indicated by the one first information field, wherein in case that i=1, Q$_{i-1}$=0.
Optionally, the DMRS ports corresponding to any two of the N pieces of first information are DMRS ports in different code division multiplexing, CDM, groups.

52. The terminal of any of claims 40 to 51, wherein DMRS ports corresponding to any two pieces of the first information among the N pieces of first information are DMRS ports in different code division multiplexing, CDM, groups.

53. The terminal of claim 52, wherein in case that one first indicator field corresponds to N CDM groups and second numbers of layers and/or numbers of sounding reference signal, SRS, resources corresponding to the N pieces of first information are different, i-th first information among the N pieces of first information corresponds to j-th CDM group among the N CDM groups, wherein a number of DMRS ports comprised in the j-th CDM group is equal to the second number of layers or the number of SRS resources corresponding to the i-th first information.

54. The terminal of any of claims 40 to 53, wherein determining the DMRS ports based on the DMRS port indication information and the first indication information comprises:

determining code division multiplexing, CDM, groups corresponding to the N pieces of first information based on the DMRS port indication information, wherein the CDM groups and second information have an association relationship; and

determining the DMRS ports corresponding to the second information based on the association relationship, wherein the second information comprises one or more of the following:

a codeword;
a beam;
an antenna panel;
a transmission/reception point, TRP;
a precoding matrix;
a precoding and/or number of layers field;
a transmission configuration indicator, TCI, state;
a control resource set pool index, CORESETPoolIndex;
a sounding reference signal, SRS, resource set; or
a sounding reference signal, SRS, resource indicator field.

55. The terminal of any of claims 40 to 54, wherein the processor is used for reading the computer program in the memory and further performing the following operations:

determining an association relationship between the DMRS ports and second information based on code division multiplexing, CDM, groups corresponding to the DMRS ports, wherein the second information comprises one or more of the following:

a codeword;
a beam;
an antenna panel;
a transmission/reception point, TRP;
a precoding matrix;
a precoding and/or number of layers field;
a transmission configuration indicator, TCI, state;
a control resource set pool index, CORESETPoolIndex; or
a sounding reference signal, SRS, resource set.

56. The terminal of claim 41, wherein determining the DMRS ports based on the first number of layers and the DMRS port indication information comprises:

determining a DMRS indication table based on the first number of layers; and
determining the DMRS ports based on the DMRS indication table and the DMRS port indication information.

57. The terminal of any of claims 40 to 56, wherein all DMRS ports indicated by the one first information field correspond to same DMRS port configuration information.

58. The terminal of claim 57, wherein the DMRS port configuration information is used to configure one or more of the following:

a DMRS type; or
a maximum number of front-loaded DMRS symbols.

59. The terminal of any of claims 40 to 58, wherein the first information is used to indicate one or more of the following:

a codeword;
a beam;
an antenna panel;
a transmission/reception point, TRP;
a precoding matrix;
a transmission configuration indicator, TCI, state;
a resource set; or
a control resource set pool index, CORESETPoolIndex.

**60.** A network device, comprising a memory, a transceiver, and a processor,
wherein the memory is used for storing a computer program; the transceiver is used for receiving and transmitting data under control of the processor; and the processor is used for reading the computer program in the memory and performing the following operations:

transmitting demodulation reference signal, DMRS, port indication information and first indication information to a terminal, wherein the DMRS port indication information is indicated by one first information field, the first indication information is used to indicate N pieces of first information, and N is an integer greater than 1; and
receiving DMRSs transmitted from the terminal, wherein DMRS ports corresponding to the DMRSs are indicated by the DMRS port indication information and the first indication information.

**61.** The network device of claim 60, wherein the DMRS ports correspond to a first number of layers and the DMRS port indication information, the first number of layers is a number of layers corresponding to the DMRS port indication information, and the first number of layers is indicated by the first indication information.

**62.** The network device of claim 61, wherein the first number of layers corresponds to a sum of second numbers of layers corresponding to the N pieces of first information; or, the first number of layers corresponds to a sum of numbers of sounding reference signal, SRS, resources corresponding to the N pieces of first information.

**63.** The network device of any of claims 61 to 62, wherein

in case that the DMRS ports are DMRS ports corresponding to codebook-based physical uplink shared channel, PUSCH, the first information is precoding and/or number of layers indication information, and the first number of layers corresponds to a number of transmission layers indicated by the precoding and/or number of layers indication information; and/or
in case that the DMRS ports are DMRS ports corresponding to non-codebook-based physical uplink shared channel, PUSCH, the first information is sounding reference signal, SRS, resource indicator, SRI, information, and the first number of layers corresponds to a number of SRS resources indicated by the SRI information.

**64.** The network device of claim 62, wherein the first number of layers is equal to the sum of the second numbers of layers corresponding to the N pieces of first information; or, the first number of layers is equal to the sum of the numbers of SRS resources corresponding to the N pieces of first information.

**65.** The network device of claim 61 or 62, wherein the first number of layers is equal to N times a second number of layers corresponding to one piece of first information indicated by the first indication information, and/or N times a number of sounding reference signal, SRS, resources corresponding to one piece of first information indicated by the first indication information.

**66.** The network device of claim 62 or 64, wherein the processor is used for reading the computer program in the memory and further performing the following operations:

indicating a sum of second numbers of layers corresponding to the N pieces of first information; and/or
indicating a sum of numbers of SRS resources corresponding to the N pieces of first information.

**67.** The network device of claim 62, wherein in case that a second number of layers corresponding to i-th first information among the N pieces of first information is $L_i$, the first number of layers is $\sum_{i=1}^{N} L_i$.

**68.** The network device of claim 62, wherein in case that a number of SRS resources corresponding to i-th first information among the N pieces of first information is $Q_i$, the first number of layers is $\sum_{i=1}^{N} Q_i$.

**69.** The network device of any of claims 63 to 68, wherein

in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, wherein in case that i=1, $L_{i-1}=0$; and/or

in case that the first information is SRI information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, wherein in case that i=1, $Q_{i-1}=0$.

70. The network device of any of claims 60 to 69, wherein the processor is used for reading the computer program in the memory and further performing the following operations:

performing joint encoding on the N pieces of first information, and indicating the N pieces of first information by one second information field; or
performing independent encoding on the N pieces of first information, and indicating the N pieces of first information by N third information fields.

71. The network device of claim 70, wherein in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, wherein in case that i=1, $L_{i-1}=0$; or
if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, wherein in case that i=1, $Q_{i-1}=0$.

72. The network device of any of claims 60 to 71, wherein DMRS ports corresponding to any two pieces of the first information among the N pieces of first information are DMRS ports in different code division multiplexing, CDM, groups.

73. The network device of claim 72, wherein in case that one first indicator field corresponds to N CDM groups and second numbers of layers and/or numbers of SRS resources corresponding to the N pieces of first information are different, i-th first information among the N pieces of first information corresponds to j-th CDM group among the N CDM groups, wherein a number of DMRS ports comprised in the j-th CDM group is equal to a second number of layers or a number of SRS resources corresponding to the i-th first information.

74. The network device of any of claims 60 to 73, wherein the processor is used for reading the computer program in the memory and further performing the following operations:
transmitting an association relationship between code division multiplexing, CDM, groups and second information to the terminal, wherein the second information comprises one or more of the following:

a codeword;
a beam;
an antenna panel;
a transmission/reception point, TRP;
a precoding matrix;
a precoding and/or number of layers field;
a transmission configuration indicator, TCI, state;
a control resource set pool index, CORESETPoolIndex;
a sounding reference signal, SRS, resource set; or
a sounding reference signal, SRS, resource indicator field.

75. The network device of claim 61, wherein the first number of layers is used to determine a DMRS indication table, and the DMRS indication table is used to determine the DMRS ports.

76. The network device of any of claims 60 to 75, wherein all DMRS ports indicated by the one first information field correspond to same DMRS port configuration information.

77. The network device of claim 76, wherein the DMRS port configuration information is used to configure one or more of the following:

a DMRS type; or
a maximum number of front-loaded DMRS symbols.

78. The network device of any of claims 60 to 77, wherein the first information is used to indicate one or more of the following:

a codeword;
a beam;
an antenna panel;
a transmission/reception point, TRP;
a precoding matrix;
a transmission configuration indicator, TCI, state;
a resource set; or
a control resource set pool index, CORESETPoolIndex.

79. An apparatus for determining demodulation reference signal, DMRS, port, comprising:

a receiving unit, used for receiving DMRS port indication information and first indication information transmitted from a network device, wherein the DMRS port indication information is indicated by one first information field, the first indication information is used to indicate N pieces of first information, and N is an integer greater than 1; and
a first determining unit, used for determining DMRS ports based on the DMRS port indication information and the first indication information.

80. The apparatus of claim 79, wherein the first determining unit comprises:

a first determining module, used for determining a first number of layers corresponding to the DMRS port indication information based on the first indication information; and
a second determining module, used for determining the DMRS ports based on the first number of layers and the DMRS port indication information.

81. The apparatus of claim 80, wherein the first determining module comprises:

a first determining sub-module, used for determining the first number of layers based on a sum of second numbers of layers corresponding to the N pieces of first information; or
a second determining sub-module, used for determining the first number of layers based on a sum of numbers of sounding reference signal, SRS, resources corresponding to the N pieces of first information.

82. The apparatus of any of claims 80 to 81, wherein in case that the DMRS ports are DMRS ports corresponding to codebook-based physical uplink shared channel, PUSCH, the first information is precoding and/or number of layers indication information, and the first number of layers is determined based on a number of transmission layers indicated by the precoding and/or number of layers indication information; and/or
in case that the DMRS ports are DMRS ports corresponding to non-codebook-based physical uplink shared channel, PUSCH, the first information is sounding reference signal, SRS, resource indicator, SRI, information, and the first number of layers is determined based on a number of SRS resources indicated by the SRI information.

83. The apparatus of claim 81, wherein the first number of layers is equal to the sum of the second numbers of layers corresponding to the N pieces of first information; or, the first number of layers is equal to the sum of the numbers of SRS resources corresponding to the N pieces of first information.

84. The apparatus of claim 80 or 81, wherein the first number of layers is equal to N times a second number of layers corresponding to one piece of the first information indicated by the first indication information, and/or N times a number of sounding reference signal, SRS, resources corresponding to one piece of the first information indicated by the first indication information.

85. The apparatus of claim 81 or 83, wherein the sum of the second numbers of layers corresponding to the N pieces of first information and/or the sum of the numbers of SRS resources corresponding to the N pieces of first information is indicated by the network device.

86. The apparatus of claim 81, wherein the first determining sub-module is used for:
in case that a second number of layers corresponding to i-th first information among the N pieces of first information is $L_i$, determining the first number of layers as $\sum_{i=1}^{N} L_i$.

87. The apparatus of claim 81, wherein the second determining sub-module is used for:
in case that a number of SRS resources corresponding to i-th first information among the N pieces of first information is $Q_i$, determining the first number of layers as $\sum_{i=1}^{N} Q_i$.

88. The apparatus of any of claims 82 to 87, wherein

in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, wherein in case that i=1, $L_{i-1}=0$; and/or
in case that the first information is sounding reference signal, SRS, resource indicator, SRI, information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, wherein in case that i=1, $Q_{i-1}=0$.

89. The apparatus of any of claims 79 to 88, wherein

the N pieces of first information are encoded jointly and indicated by one second information field; or
the N pieces of first information are encoded separately and indicated by N third information fields.

90. The apparatus of claim 89, wherein in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, wherein in case that i=1, $L_{i-1}=0$; or
if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, wherein in case that i=1, $Q_{i-1}=0$.

91. The apparatus of any of claims 79 to 90, wherein DMRS ports corresponding to any two pieces of the first information among the N pieces of first information are DMRS ports in different code division multiplexing, CDM, groups.

92. The apparatus of claim 91, wherein in case that one first indicator field corresponds to N CDM groups and second numbers of layers and/or numbers of sounding reference signal, SRS, resources corresponding to the N pieces of first information are different, i-th first information among the N pieces of first information corresponds to j-th CDM group among the N CDM groups, wherein a number of DMRS ports comprised in the j-th CDM group is equal to the second number of layers or the number of SRS resources corresponding to the i-th first information.

93. The apparatus of any of claims 79 to 92, wherein the first determining unit comprises:

a third determining module, used for determining code division multiplexing, CDM, groups corresponding to the N pieces of first information based on the DMRS port indication information, wherein the CDM groups and second information have an association relationship; and
a fourth determining module, used for determining the DMRS ports corresponding to the second information based on the association relationship,
wherein the second information comprises one or more of the following:

a codeword;
a beam;
an antenna panel;
a transmission/reception point, TRP;

a precoding matrix;
a precoding and/or number of layers field;
a transmission configuration indicator, TCI, state;
a control resource set pool index, CORESETPoolIndex;
a sounding reference signal, SRS, resource set; or
a sounding reference signal, SRS, resource indicator field.

94. The apparatus of any of claims 79 to 93, further comprising:
a second determining unit, used for determining an association relationship between the DMRS ports and second information based on code division multiplexing, CDM, groups corresponding to the DMRS ports, wherein the second information comprises one or more of the following:

a codeword;
a beam;
an antenna panel;
a transmission/reception point, TRP;
a precoding matrix;
a precoding and/or number of layers field;
a transmission configuration indicator, TCI, state;
a control resource set pool index, CORESETPoolIndex; or
a sounding reference signal, SRS, resource set.

95. The apparatus of claim 80, wherein the second determining module is used for:

determining a DMRS indication table based on the first number of layers; and
determining the DMRS ports based on the DMRS indication table and the DMRS port indication information.

96. The apparatus of any of claims 79 to 95, wherein all DMRS ports indicated by the one first information field correspond to same DMRS port configuration information.

97. The apparatus of claim 96, wherein the DMRS port configuration information is used to configure one or more of the following:

a DMRS type; or
a maximum number of front-loaded DMRS symbols.

98. The apparatus of any of claims 79 to 96, wherein the first information is used to indicate one or more of the following:

a codeword;
a beam;
an antenna panel;
a transmission/reception point, TRP;
a precoding matrix;
a transmission configuration indicator, TCI, state;
a resource set; or
a control resource set pool index, CORESETPoolIndex.

99. An apparatus for determining demodulation reference signal, DMRS, port, comprising:

a first transmitting unit, used for transmitting DMRS port indication information and first indication information to a terminal, wherein the DMRS port indication information is indicated by one first information field, the first indication information is used to indicate N pieces of first information, and N is an integer greater than 1; and
a receiving unit, used for receiving DMRSs transmitted from the terminal, wherein DMRS ports corresponding to the DMRSs are indicated by the DMRS port indication information and the first indication information.

100.
The apparatus of claim 99, wherein the DMRS ports correspond to a first number of layers and the DMRS port indication information, the first number of layers is a number of layers corresponding to the DMRS port indication information, and the first number of layers is indicated by the first indication information.

**101.**
The apparatus of claim 100, wherein the first number of layers corresponds to a sum of second numbers of layers corresponding to the N pieces of first information; or, the first number of layers corresponds to a sum of numbers of sounding reference signal, SRS, resources corresponding to the N pieces of first information.

**102.**
The apparatus of any of claims 100 to 101, wherein

in case that the DMRS ports are DMRS ports corresponding to codebook-based physical uplink shared channel, PUSCH, the first information is precoding and/or number of layers indication information, and the first number of layers corresponds to a number of transmission layers indicated by the precoding and/or number of layers indication information; and/or
in case that the DMRS ports are DMRS ports corresponding to non-codebook-based physical uplink shared channel, PUSCH, the first information is sounding reference signal, SRS, resource indicator, SRI, information, and the first number of layers corresponds to a number of SRS resources indicated by the SRI information.

**103.**
The apparatus of claim 101, wherein the first number of layers is equal to the sum of the second numbers of layers corresponding to the N pieces of first information; or, the first number of layers is equal to the sum of the numbers of SRS resources corresponding to the N pieces of first information.

**104.**
The apparatus of claim 100 or 101, wherein the first number of layers is equal to N times a second number of layers corresponding to one piece of first information indicated by the first indication information, and/or N times a number of sounding reference signal, SRS, resources corresponding to one piece of first information indicated by the first indication information.

**105.**
The apparatus of claim 101 or 103, further comprising:
an indicating unit, used for indicating a sum of second numbers of layers corresponding to the N pieces of first information; and/or indicating a sum of numbers of SRS resources corresponding to the N pieces of first information.

**106.**
The apparatus of claim 101, wherein in case that a second number of layers corresponding to i-th first information among the N pieces of first information is $L_i$, the first number of layers is $\sum_{i=1}^{N} L_i$.

**107.**
The apparatus of claim 101, wherein in case that a number of SRS resources corresponding to i-th first information among the N pieces of first information is $Q_i$, the first number of layers is $\sum_{i=1}^{N} Q_i$.

**108.**
The apparatus of any of claims 102 to 107, wherein

in case that the first information is precoding and/or number of layers indication information, if a second number of layers corresponding to i-th first information among the N pieces of first information is $L_i$, a precoding matrix and/or layer indicated by the i-th first information corresponds to $(L_{i-1}+1)$-th DMRS port to $(L_{i-1}+L_i)$-th DMRS port indicated by the one first information field, wherein in case that i=1, $L_{i-1}$=0; and/or
in case that the first information is SRI information, if a number of SRS resources corresponding to i-th first information among the N pieces of first information is $Q_i$, SRS resources indicated by the i-th first information correspond to $(Q_{i-1}+1)$-th DMRS port to $(Q_{i-1}+Q_i)$-th DMRS port indicated by the one first information field, wherein in case that i=1, $Q_{i-1}$=0.

**109.**
The apparatus of any of claims 99 to 108, further comprising: an encoding unit, used for:

performing joint encoding on the N pieces of first information, and indicating the N pieces of first information by one second information field; or

performing independent encoding on the N pieces of first information, and indicating the N pieces of first information by N third information fields.

**110.**
The apparatus of claim 109, wherein in case that the N pieces of first information are encoded separately and indicated by the N third information fields,

if a second number of layers corresponding to i-th third information field among the N third information fields is $L_i$, the i-th third information field among the N third information fields corresponds to $(L_{i-1}+1)$-th DMRS port to $(L_{i-1}+L_i)$-th DMRS port indicated by the one first information field, wherein in case that i=1, $L_{i-1}$=0; or
if a number of SRS resources corresponding to i-th third information field among the N third information fields is $Q_i$, the i-th third information field among the N third information fields corresponds to $(Q_{i-1}+1)$-th DMRS port to $(Q_{i-1}+Q_i)$-th DMRS port indicated by the one first information field, wherein in case that i=1, $Q_{i-1}$=0.

**111.** The apparatus of any of claims 99 to 110, wherein DMRS ports corresponding to any two pieces of the first information among the N pieces of first information are DMRS ports in different code division multiplexing, CDM, groups.

**112.**
The apparatus of claim 111, wherein in case that one first indicator field corresponds to N CDM groups and second numbers of layers and/or numbers of SRS resources corresponding to the N pieces of first information are different, i-th first information among the N pieces of first information corresponds to j-th CDM group among the N CDM groups, wherein a number of DMRS ports comprised in the j-th CDM group is equal to a second number of layers or a number of SRS resources corresponding to the i-th first information.

**113.**
The apparatus of any of claims 99 to 112, further comprising:
a second transmitting unit, used for transmitting an association relationship between code division multiplexing, CDM, groups and second information to the terminal, wherein the second information comprises one or more of the following:

a codeword;
a beam;
an antenna panel;
a transmission/reception point, TRP;
a precoding matrix;
a precoding and/or number of layers field;
a transmission configuration indicator, TCI, state;
a control resource set pool index, CORESETPoolIndex;
a sounding reference signal, SRS, resource set; or
a sounding reference signal, SRS, resource indicator field.

**114.**
The apparatus of claim 100, wherein the first number of layers is used to determine a DMRS indication table, and the DMRS indication table is used to determine the DMRS ports.

**115.**
The apparatus of any of claims 99 to 114, wherein all DMRS ports indicated by the one first information field correspond to same DMRS port configuration information.

**116.**
The apparatus of claim 115, wherein the DMRS port configuration information is used to configure one or more of the following:

a DMRS type; or
a maximum number of front-loaded DMRS symbols.

**117.**

The apparatus of any of claims 99 to 116, wherein the first information is used to indicate one or more of the following:

a codeword;
a beam;
an antenna panel;
a transmission/reception point, TRP;
a precoding matrix;
a transmission configuration indicator, TCI, state;
a resource set; or
a control resource set pool index, CORESETPoolIndex.

**118.**
A computer-readable storage medium, wherein the computer-readable storage medium stores a computer program, and the computer program is used for causing a computer to perform the method of any of claims 1 to 20, or the method of any of claims 21 to 39.

Receiving DMRS port indication information and first indication information transmitted from a network device, where the DMRS port indication information is indicated by one first information field, the first indication information is used to indicate N pieces of first information, and N is an integer greater than 1

101

Determining DMRS ports based on the DMRS port indication information and the first indication information

102

FIG. 1

Transmitting DMRS port indication information and first indication information to a terminal, where the DMRS port indication information is indicated by one first information field, the first indication information is used to indicate N pieces of first information, and N is an integer greater than 1

201

Receiving DMRSs transmitted from the terminal, where DMRS ports corresponding to the DMRSs are indicated by the DMRS port indication information and the first indication information

202

FIG. 2

303

Processor

302

301

Bus interface

Transceiver

Memory

304

User interface

FIG. 3

EP 4 572 208 A1

```
    ┌─ 403
┌──────────┐                                              ┌─ 402
│ Processor │ ⟺                                          ┌──────────────┐
└──────────┘    ┌────────────────────┐        ⟺        │  Transceiver  │
    ┌─ 401      │                     │                  └──────────────┘
┌──────────┐    │    Bus interface    │ ⟺
│  Memory  │ ⟺ │                     │
└──────────┘    └────────────────────┘
```

FIG. 4

```
┌──────────────────┐
│  Receiving unit   │ ⟶ 501
└──────────────────┘
          │
┌──────────────────┐
│ First determining │ ⟶ 502
│       unit        │
└──────────────────┘
```

FIG. 5

```
┌──────────────────┐
│ First transmitting│ ⟶ 601
│       unit        │
└──────────────────┘
          │
┌──────────────────┐
│  Receiving unit   │ ⟶ 602
└──────────────────┘
```

FIG. 6

## INTERNATIONAL SEARCH REPORT

| | |
|---|---|
| International application No. | |
| | **PCT/CN2023/112249** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

3GPP, CNTXT, DWPI, ENTXT: 端口, 层, 秩, 多, 传输点, 面板, 天线, 重复, dci, DMRS, port, panel, TRP, PUSCH, repetition, sri, srs, multi+

### C. DOCUMENTS CONSIDERED TO BE RELEVANT

| Category* | Citation of document, with indication, where appropriate, of the relevant passages | Relevant to claim No. |
|---|---|---|
| X | CN 114257354 A (CHINA MOBILE COMMUNICATION LTD., RESEARCH INSTITUTE et al.) 29 March 2022 (2022-03-29)<br>description, paragraphs 3 and 53-203 | 1-118 |
| A | WO 2021161272 A1 (TELEFONAKTIEBOLAGET LM ERICSSON (PUBL)) 19 August 2021 (2021-08-19)<br>entire document | 1-118 |
| A | WO 2022147393 A1 (QUALCOMM INC.) 07 July 2022 (2022-07-07)<br>entire document | 1-118 |
| A | HUAWEI et al. "Reliability/robustness enhancement with multi-TRP/panel"<br>*3GPP TSG RAN WG1 meeting #96b, R1-1903983,* 12 April 2019 (2019-04-12),<br>entire document | 1-118 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 October 2023** | **24 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/112249**

| Patent document cited in search report | | | Publication date (day/month/year) | Patent family member(s) | | | Publication date (day/month/year) |
|---|---|---|---|---|---|---|---|
| CN | 114257354 | A | 29 March 2022 | WO | 2022063088 | A1 | 31 March 2022 |
| WO | 2021161272 | A1 | 19 August 2021 | EP | 4104330 | A1 | 21 December 2022 |
| | | | | US | 2023076139 | A1 | 09 March 2023 |
| WO | 2022147393 | A1 | 07 July 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210969484